# EUROPEAN PATENT APPLICATION

(11) **EP 3 032 390 A2**
(43) Date of publication of application: **15.06.2016**
(21) Application number: 15199486.0
(22) Date of filing: 11.12.2015
(51) Int. Cl.: G06F 3/048, G06Q 10/00, G06F 3/0481

(54) **METHOD AND APPARATUS FOR PROVIDING OBJECT-RELATED SERVICES**

(30) Priority: 11.12.2014 KR 20140178466
(71) Applicant: Samsung Electronics Co., Ltd, Gyeonggi-do 16677 (KR)
(72) Inventor: CHUN, Jae-Woong, 16677 Gyeonggi-do (KR); YOON, Su-Ha, 16677 Gyeonggi-do (KR); RYU, Eun-Seok, 16677 Gyeonggi-do (KR); PARK, Su-Young, 16677 Gyeonggi-do (KR); JUNG, Eui-Chang, 16677 Gyeonggi-do (KR); CHEONG, Cheol-Ho, 16677 Gyeonggi-do (KR)
(74) Representative: HGF Limited

(57) **Abstract**

Provided is a method for providing a service by an electronic device. The method includes: displaying a first object on a display of the electronic device, the first object being associated with at least one of a first content or a first function; determining a service related to the first object based on at least one of the first content or the first function; and providing the service.

## Description

### TECHNICAL FIELD

Various embodiments of the present disclosure relate to electronic devices, in general, and more particularly to a method and apparatus for providing object-related services.

### BACKGROUND

Recently, electronic devices have provided various types of interfaces, such as a text-based interface, a graphic-based interface, a sound-based interface, and so forth, as user interfaces capable of interacting with users. Users may access a system of an electronic device or execute an application installed in the electronic device, by using various interfaces.

The electronic devices have evolved into various forms including not only user-held devices such as a tablet personal computer (PC), a smartphone, and the like, but also wearable devices that are wearable or implantable on a body part of a user, such as an electronic watch (e.g., a smart watch) or a head-mounted display (HMD) (e.g., electronic glasses). The electronic device may be connected with external electronic devices in various forms, for example, by using short-range communication or long-range communication, to transmit and receive data to and from the external electronic devices.

When the electronic device provides a graphic-based interface, the electronic device may display an application installed therein in the form of an icon on a display, providing simple information for distinguishing the application from another application without providing a service related to the icon. For example, for a message application, the electronic device may merely indicate the message application or the number of new messages with an icon. From the displayed number of new messages, a user may not intuitively know functions related to contents of the new messages and thus need to open the new messages one by one. To perform an additional operation related to contents of a message (e.g., a search for further information related to the contents of the message over the Internet), the user may undergo a cumbersome process of doing an additional input for executing an independent application other than the message application.

Moreover, when the user has a plurality of electronic devices, the user may use a function of each electronic device merely through the electronic device and may not use the functions of the plurality of electronic devices in association with one another. For example, an electronic device in user's packet may merely display health-related contents received in the electronic device and may not measure user's pulse related to the health-related contents in the current position of the electronic device.

In this case, the user has to separately search for an external electronic device supporting a service for measuring the user's pulse related to the health-related content, experiencing inconvenience. For example, the plurality of electronic devices may not automatically provide a pulse measurement function to the user in association with one another, based on contents received in the one of the plurality of electronic devices.

The above information is presented as background information only to assist with an understanding of the present disclosure. No determination has been made, and no assertion is made, as to whether any of the above might be applicable as prior art with regard to the present disclosure.

### SUMMARY

According to aspects of the disclosure, a method for providing a service by an electronic device is provided comprising: displaying a first object on a display of an electronic device, the first object being associated with at least one of a first content or a first function; determining a service related to the first object based on at least one of the first content or the first function; and providing the service.

According to aspects of the disclosure, an electronic device for providing a service is provided comprising: a display; and at least one processor configured to: display a first object on the display, the first object being associated with at least one of a first content or a first function; determine a service related to the first object based on at least one of the first content or the first function; and provide the service.

According to aspects of the disclosure, a non-transitory computer-readable medium is provided that stores one or more processor-executable instructions, which, when executed by at least one processor, cause the processor to perform a method comprising: displaying a first object, the first object being associated with at least one of a first content or a first function; determining at least one service related to the first object based on at least one of the first content or the first function; and providing the service.

### BRIEF DESCRIPTION OF THE DRAWINGS

Throughout the drawings, it should be noted that like reference numbers are used to depict the same or similar elements, features, and structures, wherein:
FIG. 1 is a diagram of an example of a user interface, according to various embodiments of the present disclosure;
FIG. 2 is a diagram of an example of a network environment, according to various embodiments of the present disclosure;
FIG. 3 is a block diagram of an example of an electronic device, according to various embodiments of the present disclosure;
FIG. 4 is a block diagram of an example of a programming module, according to various embodiments of the present disclosure;
FIG. 5 is a block diagram of an example of a service management module, according to various embodiments of the present disclosure;
FIG. 6A is a diagram of an example of a user interface, according to various embodiments of the present disclosure;
FIG. 6B is a diagram of an example of a user interface, according to various embodiments of the present disclosure;
FIG. 6C is a diagram of an example of a user interface, according to various embodiments of the present disclosure;
FIG. 7A is a diagram of an example of a user interface, according to various embodiments of the present disclosure;
FIG. 7B is a diagram of an example of a user interface, according to various embodiments of the present disclosure;
FIG. 8 is a diagram of an example of a user interface, according to various embodiments of the present disclosure;
FIG. 9 is a flowchart of an example of a process, according to various embodiments of the present disclosure; and
FIG. 10 is a flowchart of an example of a process, according to various embodiments of the present disclosure.

Throughout the drawings, like reference numerals will be understood to refer to like parts, components, and structures.

### DETAILED DESCRIPTION

Hereinafter, various embodiments of the present disclosure will be disclosed with reference to the accompanying drawings. However, the present disclosure is not intended to limit the present disclosure to particular embodiments, and it should be construed as including various modifications, equivalents, and/or alternatives according to the embodiments of the present disclosure. In regard to the description of the drawings, like reference numerals refer to like elements.

In the present disclosure, an expression such as "having", "may have", "comprising", or "may comprise" indicates the existence of a corresponding characteristic (such as an element such as a numerical value, function, operation, or component) and does not exclude existence of additional characteristic.

In the present disclosure, an expression such as "A or B", "at least one of A or/and B", or "one or more of A or/and B" may include all possible combinations of together listed items. For example, "A or B", "at least one of A and B", or "one or more of A or B" may indicate the entire of (1) including at least one A, (2) including at least one B, or (3) including both at least one A and at least one B.

Expressions such as "first", "second", "primarily", or "secondary" used in various exemplary embodiments may represent various elements regardless of order and/or importance and do not limit corresponding elements. The expressions may be used for distinguishing one element from another element. For example, a first user device and a second user device may represent different user devices regardless of order or importance. For example, a first element may be referred to as a second element without deviating from the scope of the present disclosure, and similarly, a second element may be referred to as a first element.

When it is described that an element (such as a first element) is "operatively or communicatively coupled" to or "connected" to another element (such as a second element), the element can be directly connected to the other element or can be connected to the other element through a third element. However, when it is described that an element (such as a first element) is "directly connected" or "directly coupled" to another element (such as a second element), it means that there is no intermediate element (such as a third element) between the element and the other element.

An expression "configured to (or set)" used in the present disclosure may be replaced with, for example, "suitable for", "having the capacity to", "designed to", "adapted to", "made to", or "capable of" according to a situation. A term "configured to (or set)" does not always mean only "specifically designed to" by hardware. Alternatively, in some situation, an expression "apparatus configured to" may mean that the apparatus "can" operate together with another apparatus or component. For example, a phrase "a processor configured (or set) to perform A, B, and C" may be a generic-purpose processor (such as a CPU or an application processor) that can perform a corresponding operation by executing at least one software program stored at an exclusive processor (such as an embedded processor) for performing a corresponding operation or at a memory device.

Terms defined in the present disclosure are used for only describing a specific exemplary embodiment and may not have the intention to limit the scope of other exemplary embodiments. When using in a description of the present disclosure and the appended claims, a singular form may include a plurality of forms unless it is explicitly differently represented. Entire terms including a technical term and a scientific term used here may have the same meaning as a meaning that may be generally understood by a person of common skill in the art. It may be analyzed that terms defined in general dictionaries among terms used herein have the same meaning as or a meaning similar to that of a context of related technology and are not analyzed as an ideal or excessively formal meaning unless explicitly defined. In some case, terms defined in the present disclosure cannot be analyzed to exclude the present exemplary embodiments.

An electronic device according to various embodiments of the present disclosure may be a device including a communication function. For example, the electronic device may include at least one of a smartphone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), an MP3 player, mobile medical equipment, a camera, and a wearable device. According to various embodiments of the present disclosure, the wearable device may include an accessory type (e.g., a watch, a ring, a bracelet, an ankle bracelet, a necklace, glasses, or contact lenses), a Head-Mounted Device (HMD), or fabric or cloth-integrated type (e.g., a skin pad or a tattoo), or a body-implanted type (e.g., an implantable circuit).

According to some embodiments, the electronic device may be a home appliance. The home appliance may include, for example, at least one of a Television (TV), a Digital Video Disk (DVD) player, audio equipment, a refrigerator, an air conditioner, a vacuum cleaner, an oven, a microwave oven, a washing machine, an air cleaner, a set-top box, a home automation control panel, a security control panel, a TV box (e.g., Samsung HomeSync^{™}, Apple TV^{™}, or Google TV^{™}), a game console (e.g., Xbox^{™} or PlayStation^{™}), an electronic dictionary, an electronic key, a camcorder, and an electronic frame.

According to another embodiment, the electronic device may include at least one of various medical equipment (e.g., various portable medical measurement systems, such as a blood sugar measurement device, a heartbeat measurement device, a blood pressure measurement device, or a body temperature measurement device, Magnetic Resonance Angiography (MRA), Magnetic Resonance Imaging (MRI), Computed Tomography (CT), an imaging device, or an ultrasonic device), a navigation system, a Global Positioning System (GPS) receiver, an Event Data Recorder (EDR), a Flight Data Recorder (FDR), a vehicle infotainment device, electronic equipment for ships (e.g., navigation system and gyro compass for ships), avionics, a security device, a vehicle head unit, an industrial or home robot, an Automatic Teller's Machine (ATM), a Point of Sales (POS), Internet of things (e.g., electric bulbs, various sensors, electricity or gas meters, sprinkler devices, fire alarm devices, thermostats, streetlights, toasters, exercise machines, hot-water tanks, heaters, boilers, etc.).

According to some embodiments, the electronic device may include a part of a furniture or building/structure, an electronic board, an electronic signature receiving device, a projector, and various measuring instruments (e.g., a water, electricity, gas, or electric wave measuring device). The electronic device according to various embodiments of the present disclosure may be one of the above-listed devices or a combination thereof. The electronic device according to various embodiments of the present disclosure may be a flexible device. It will be obvious to those of ordinary skill in the art that the electronic device according to various embodiments of the present disclosure is not limited to the above-listed devices and may include new electronic devices according to technical development.

Hereinafter, an electronic device according to various embodiments of the present disclosure will be described with reference to the accompanying drawings. Herein, the term "user" used in various embodiments of the present disclosure may refer to a person who uses the electronic device or a device using the electronic device (e.g., an artificial intelligence electronic device).

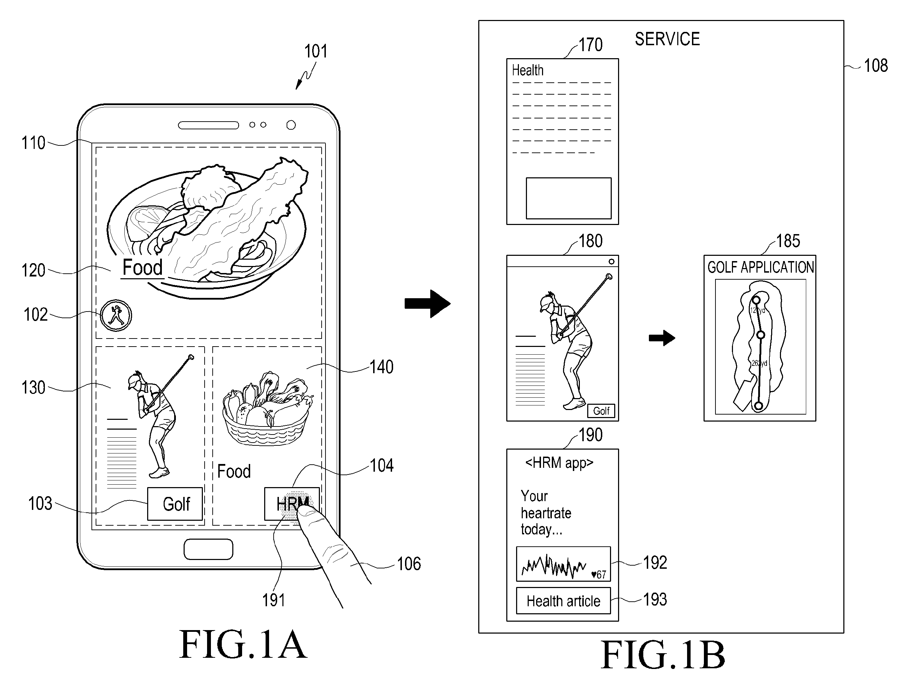

FIG. 1 is a diagram of an example of a user interface, according to various embodiments of the present disclosure. As illustrated, according to various embodiments of the present disclosure, at least one of objects 120, 130, and 140 may be displayed on a display 110 functionally connected with (e.g., included in) the electronic device 101. Any of the objects 120, 130, and 140 may include an icon, a widget, an image, a text, a multimedia, or a folder.

For example, the first object 120 including a text and an image related to "food" may be displayed on an upper portion of the display 110. The second object 130 including a text and an image related to "golf" may be displayed on a lower left portion of the display 110. The third object 140 including a text and an image related to "health" may be displayed on a lower right portion of the display 110.

According to an embodiment of the present disclosure, the objects 120, 130, and 140 may be arranged in a lattice form. According to various embodiments of the present disclosure, the objects 120, 130, and 140 may be arranged in any suitable type of arrangement, such as a circular form, a list form, or the like. According to an embodiment of the present disclosure, the at least one objects 120, 130, and 140 may be displayed in a "quadrangular form". According to various embodiments of the present disclosure, a shape in which the at least one objects 120, 130, and 140 are displayed is not limited, and may be various, such as a circular shape or a triangular shape, as well as a quadrangular shape.

According to an embodiment of the present disclosure, a service 108 related to content or a function corresponding to the at least one objects 120, 130, and 140 is provided via the electronic device 101. The content may include an article (e.g., a research paper, an advertisement, or the like) including at least one of a text, an image, audio, and video. Additionally or alternatively, the content may include, for example, an attribute, a field, a theme, a summary, or a keyword regarding an object. The function corresponding to the one or more objects 120, 130, and 140 may include, for example, an application corresponding to an object (e.g., an article viewer application).

According to an embodiment of the present disclosure, representations 102, 103, and 104 corresponding to the at least one service 108 related to the content or function corresponding to the at least one objects 120, 130, and 140 may be displayed in areas related to the at least one objects 120, 130, and 140. The representations 102, 103, and 104 may include an icon, a text, audio, an output window, a marker, a barcode, or a watermark corresponding to the service 108. For example, the representation may show a user interface related to the service 108 (*e.g.,* reduced interface), or a summary of the service.

For example, the first object 120 may be labeled "food" and it may include a representation 102 corresponding to the service 108 related to "food". For example, the service 108 may be a health management application, and it may be displayed in a portion of an area where the first object 120 is displayed. For example, the second object 130 may be associated with the keyword "golf" (or another type of content) and a second representation 103. The second representation 103 may correspond to a golf application 185, which is an icon, a text, an output window, or a barcode including a word "Golf", may be displayed in a portion of an area where the second object 130 is displayed.

For example, as content corresponding to the third object 140, a theme of the third object 140 may be "heart". The third object 140 may include the third representation 104 corresponding to a "heart rate monitor (HRM)" sensor for measuring a heart rate of a user 106. The third representation 104 may include an icon, a text, an output window, or a barcode including a word "HRM." The third representation 104 may be displayed in a portion of an area corresponding to an input 191 (e.g., a touch, hovering, or an electronic pen input) of the user 106 with respect to the third object 140. According to various embodiments of the present disclosure, the representations 102, 103, and 104 may be displayed if there is an input of the user 106 with respect to a service related to at least one of the objects 120, 130, and 140. According to various embodiments of the present disclosure, content regarding the object 140 may be changed into another content (not shown). In this case, the representations 102, 103, and 104 may disappear or be replaced with other representations regarding other services.

Referring to FIG. 1, if the user 106 selects any of the representations 102, 103, and 104, the service 108 corresponding to the selected representation may be executed. For example, if the user 106 selects the first representation 102, an execution screen 170 of the health management application may be presented as the service 108 on the display 110.

As another example, if the second representation 103 is displayed in a portion of the area where the second object 130 is displayed, the user 106 may select (e.g., touch) the second object 130. In this case, an execution screen 180 (e.g., an article related to golf) of an article viewer application corresponding to the second object 130 may be presented on the display 110. The second representation 103 may be continuously displayed in a portion of the execution screen 180 of the article viewer application. If the user 106 selects the second representation 103, an execution screen 185 of a golf application corresponding to the second representation 103 may be provided as the service 108 on the display 110.

Additionally or alternatively, if the user 106 selects (e.g., touches) the third representation 104, an execution screen 190 of an HRM application may be provided as the service 108 on the display 110. The electronic device 101 may obtain heart rate data from an external electronic device (e.g., a wrist watch electronic device including a biometric sensor) which is measuring heart rate data. In this case, heart rate data 192 may be displayed on the execution screen 190 of the HRM application, as shown. In the execution screen 190 of the HRM application, a representation 193 may be displayed which corresponds to an article viewer application for viewing an article related to cardiovascular health.

Although not shown in FIG. 1, according to an embodiment of the present disclosure, the service 108 related to content or a function corresponding to an object may be provided in place of a representation corresponding to the object. For example, if a field of an object is "beauty" as content corresponding to the object, an execution screen corresponding to a beauty application corresponding to "beauty" may be automatically provided on the display 110. In this case, the execution screen corresponding to the beauty application and a subset of the content corresponding to the object may be displayed at the same time or sequentially on the display 110.

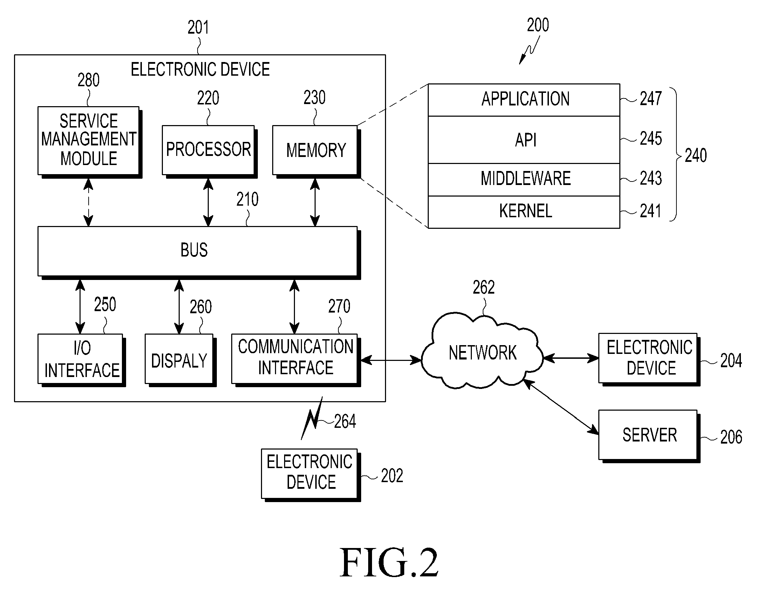

FIG. 2 is a diagram of an example of a network environment, according to various embodiments of the present disclosure.

Referring to FIG. 2, a description will be made of an electronic device 201 in a network environment 200 according to various embodiments of the present disclosure. The electronic device 201 may include at least one of a bus 210, a processor 220, a memory 230, an I/O interface 250, a display 260, a communication interface 270, and a service management module 280. According to some embodiments, the electronic device 201 may omit at least one of the foregoing elements or may further include other elements.

The bus 210 may include a circuit for interconnecting the elements 220 through 280 described above and for allowing communication (e.g., a control message and/or data) between the elements 210 through 280.

The processor 220 may include one or more processors. Any of the processors may include one or more of a central processing unit (CPU), an application processor (AP), or a communication processor (CP), a general-purpose processor (e.g., ARM-based processors), a Digital Signal Processor (DSP), a Programmable Logic Device (PLD), an Application-Specific Integrated Circuit (ASIC), a Field-Programmable Gate Array (FPGA), and/or any other suitable type of processing circuitry. The processor 220 performs operations or data processing for control and/or communication of, for example, at least one other elements of the electronic device 201. According to various embodiments of the present disclosure, the processor 220 receives a command from the service management module 280, interprets the received command, and performs an operation or data processing corresponding to the interpreted command.

According to another embodiment of the present disclosure, the processor 220 may be implemented including the service management module 280 to perform every operation performed in the service management module 280.

The memory 230 may include any suitable type of volatile or non-volatile memory, such as Random Access Memory (RAM), Read-Only Memory (ROM), Network Accessible Storage (NAS), cloud storage, a Solid State Drive (SSD), etc. The memory 230 may store, for example, commands or data associated with at least one other elements of the electronic device 201. According to an embodiment of the present disclosure, the memory 230 may store software and/or a program 240. The program 240 may include, for example, a kernel 241, middleware 243, an Application Programming Interface (API) 245, and/or an application program (or application) 247. At least some of the kernel 241, the middleware 243, and the API 245 may be referred to as an Operating System (OS).

According to an embodiment of the present disclosure, the memory 230 may store one or more contents or functions. The content may include, for example, a text, an image, audio, video, and so forth. According to an embodiment of the present disclosure, the memory 230 may store detailed information associated with the content. The detailed information may include, for example, an attribute (e.g., a file format, a file size, a creation time, or creator information), a theme, a keyword, or a summary of the content. According to an embodiment of the present disclosure, the memory 230 may store data regarding a condition of the electronic device 201 or the external electronic device 202 (e.g., sensor information, application installation information, specification information, position information, an electronic device operation history, statistic information, information stored in a server, user's personal information, a content attribute, or a reference keyword).

According to an embodiment of the present disclosure, the memory 230 may store information about one or more services. The service may include, for example, an application (e.g., a related web page) capable of providing detailed information regarding content (or function) displayed on the display 260, an application (or a function) capable of controlling a function of the external electronic device 202 related to the content (or function), an application (or function) capable of measuring user's biometric information related to the content (or function), or the like.

The kernel 241 controls or manages, for example, system resources (e.g., the bus 210, the processor 220, or the memory 230) used to execute an operation or a function implemented in other programs (e.g., the middleware 243, the API 245, or the application program 247). The kernel 241 provides an interface through which the middleware 243, the API 245, or the application program 247 accesses separate components of the electronic device 201 to control or manage the system resources.

The middleware 243 may work as an intermediary for allowing, for example, the API 245 or the application program 247 to exchange data in communication with the kernel 141.

The middleware 243 may process one or more task requests received from the application program 247 according to priorities. For example, the middleware 243 may give priorities for using a system resource (e.g., the bus 210, the processor 220, or the memory 230) of the electronic device 201 to at least one of the application programs 247. Thus, the middleware 243 processes the one or more task requests according to the priorities given to the at least one application program 247, thus performing scheduling or load balancing with respect to the one or more task requests.

The API 245 is an interface used for the application 247 to control a function provided by the kernel 241 or the middleware 243, and may include, for example, at least one interface or function (e.g., a command) for file control, window control, image processing or text control.

The I/O interface 250 serves as an interface for delivering a command or data input from a user or another external device to other element(s) of the electronic device 201. The I/O interface 250 may also output a command or data received from other element(s) of the electronic device 201 to a user or another external device.

The display module 160 may include, for example, a Liquid Crystal Display (LCD), a Light Emitting Diode (LED) display, an Organic Light Emitting Diode (OLED) display, a MicroElectroMechanical System (MEMS) display, or an electronic paper display. The display 260 may display various contents (e.g., a text, an image, video, an icon, or a symbol) to users. According to an embodiment of the present disclosure, the display 260 may display one or more objects on a home screen. The home screen is a screen on which a background set in the electronic device 201 is output, and for example, objects corresponding to one or more applications or contents (e.g., icons, widgets, or texts) may be displayed on the home screen. The display 260 may include a touch screen, and receives a touch, a gesture, proximity, or a hovering input, for example, by using an electronic pen or a part of a body of a user.

The communication interface 270 sets up communication, for example, between the electronic device 201 and an external device (e.g., a first external electronic device 202, a second external electronic device 204, or a server 206). For example, the communication interface 270 is connected to a network 262 through wireless or wired communication to communicate with the external device (e.g., the second external electronic device 204 or the server 206).

According to an embodiment of the present disclosure, the communication interface 270 may be implemented as a part of the service management module 280, and the service management module 280 may perform every operation that may be performed by the communication interface 270.

The wireless communication may use, as a cellular communication protocol, for example, at least one of long-term evolution (LTE), LTE-advanced (LTE-A), code division multiple access (CDMA), wideband CDMA (WCDMA), a universal mobile telecommunication system (UMTS), wireless broadband (WiBro), or global system for mobile communications (GSM)). The wireless communication may also include short-range communication 264. The short-range communication 264 may include at least one of wireless fidelity (WiFi), Bluetooth, near-field communication (NFC), and a global positioning system (GPS). The wired communication may include, for example, at least one of a universal serial bus (USB), a high-definition multimedia interface (HDMI), a recommended standard (RS)-2032, and a plain old telephone service (POTS). The network 262 may include a telecommunications network, for example, at least one of a computer network (e.g., a local area network (LAN) or a wide area network (WAN)), the Internet, and a telephone network.

At least one of the first external electronic device 202 and the second external electronic device 204 may be a device of the same type as or a different type than the electronic device 201. According to an embodiment of the present disclosure, the server 206 may include a group of one or more servers. According to various embodiments, all or some of operations performed in the electronic device 201 may be performed in another electronic device or a plurality of electronic devices (e.g., the electronic devices 202 and 204 or the server 206). According to an embodiment of the present disclosure, when the electronic device 201 has to perform a function or a service automatically or at the request, the electronic device 201 may request another device (e.g., the electronic devices 202 and 204 or the server 206) to perform at least some functions associated with the function or the service instead of or in addition to executing the function or the service. The other electronic device (e.g., the electronic devices 202 and 204 or the server 206) may perform the requested function or an additional function and delivers the result to the electronic device 201. The electronic device 201 provides the received result or provides the requested function or service by processing the received result. To this end, for example, cloud computing, distributed computing, or client-server computing may be used.

According to an embodiment of the present disclosure, other electronic devices (e.g., the electronic devices 202 and 204) may be wearable devices and may include a sensor such as a gesture sensor, a gyro sensor, an acceleration sensor, a grip sensor, a biometric sensor, or a temperature/humidity sensor. The other electronic devices (e.g., the electronic devices 202 and 204) may transmit data measured by the included sensor to the electronic device 201 through wireless communication (e.g., the network 262 or the short-range communication 264).

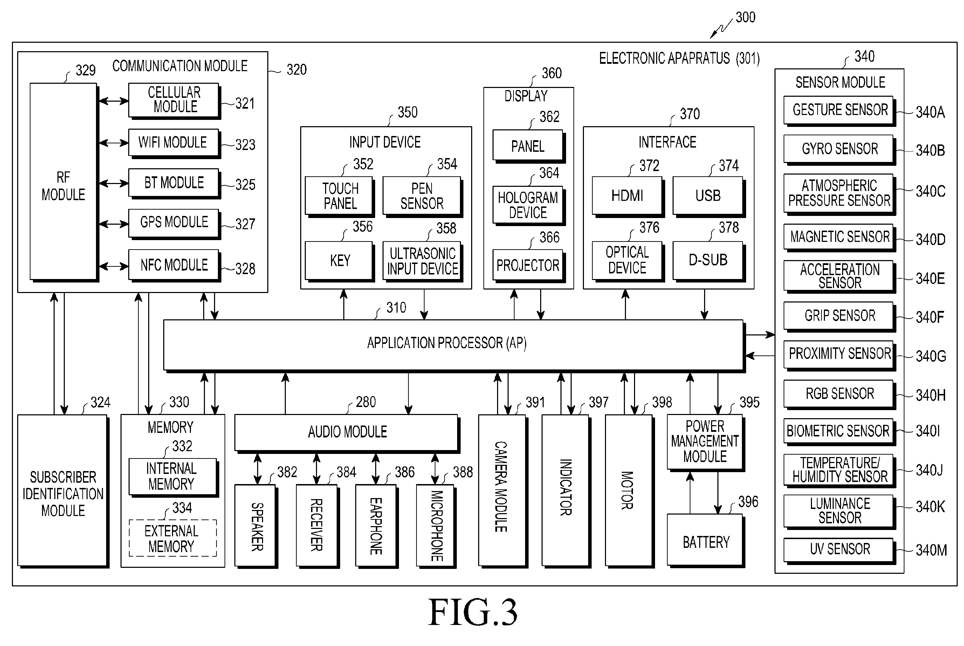

FIG. 3 is a block diagram of an electronic device 301 according to various embodiments of the present disclosure. The electronic device 301 may include the entire electronic device 201 illustrated in FIG. 2 or a part of the electronic device 201 illustrated in FIG. 2. The electronic device 301 may include one or more application processors (APs) 310, a communication module 320, a subscriber identification module (SIM) card 324, a memory 330, a sensor module 340, an input device 350, a display 360, an interface 370, an audio module 380, a camera module 391, a power management module 395, a battery 396, an indicator 397, and a motor 398.

The processor 310 controls multiple hardware or software components connected to the processor 310 by driving an operating system (OS) or an application program, and performs processing and operations with respect to various data including multimedia data. The processor 310 may be implemented with, for example, a system on chip (SoC). According to an embodiment, the processor 310 may further include a graphic processing unit (GPU) and/or an image signal processor. The processor 310 may include at least some (e.g., the cellular module 321) of the components illustrated in FIG. 3. The processor 310 loads a command or data received from at least one of other elements (e.g., a non-volatile memory) into a volatile memory and processes the command or data and stores various data in the non-volatile memory.

The communication module 320 may have a configuration that is the same as or similar to the communication interface 270 illustrated in FIG. 2. The communication module 320 may include, for example, the cellular module 321, a WiFi module 323, a Bluetooth (BT) module 325, a global positioning system (GPS) module 327, a near-field communication (NFC) module 328, and a radio frequency (RF) module 329.

The cellular module 321 may provide, for example, a voice call, a video call, a text service, or an Internet service over a communication network. According to an embodiment, the cellular module 321 may identify and authenticate the electronic device 301 in a communication network by using a SIM (e.g., the SIM card) 324. According to an embodiment, the cellular module 321 performs at least one of functions that may be provided by the processor 310. According to an embodiment, the cellular module 321 may include a communication processor (CP).

At least one of the WiFi module 323, the BT module 325, the GPS module 327, and the NFC module 328 may include a processor for processing data transmitted and received by a corresponding module. According to some embodiment, at least some (e.g., two or more) of the cellular module 321, the WiFi module 323, the BT module 325, the GPS module 327, and the NFC module 328 may be included in one Integrated Chip (IC) or IC package.

The RF module 329 may transmit and receive a communication signal (e.g., an RF signal). The RF module 329 may include a transceiver, a power amplifier module (PAM), a frequency filter, a low noise amplifier (LNA), or an antenna. According to another embodiment, at least one of the cellular module 321, the WiFi module 323, the BT module 325, the GPS module 327, and the NFC module 328 may transmit and receive an RF signal via a separate RF module.

The SIM 324 may include a card including an SIM and/or an embedded SIM, and may include unique identification information (e.g., an integrated circuit card identifier (ICCID) or subscriber information (e.g., an international mobile subscriber identity (IMSI)).

The memory 330 (e.g., the memory 230) may include an internal memory 332 or an external memory 334. The internal memory 332 may include at least one of a volatile memory (e.g., dynamic random access memory (DRAM), static RAM (SRAM), synchronous dynamic RAM (SDRAM), and a non-volatile memory (e.g., one time programmable read-only memory (OTPROM), programmable ROM (PROM), erasable and programmable ROM (EPROM), electrically erasable and programmable ROM (EEPROM), mask ROM, flash ROM, NAND flash memory, or NOR flash memory), and a solid state drive (SSD).

The external memory 334 may further include flash drive, for example, compact flash (CF), secure digital (SD), micro-SD, mini-SD, extreme Digital (xD), a Multimedia Card (MMC), or a memory stick. The external memory 334 may be functionally and/or physically connected with the electronic device 301 through various interfaces.

The sensor module 340 measures physical quantity or senses an operation state of the electronic device 301 to convert the measured or sensed information into an electric signal. The sensor module 340 may include at least one of a gesture sensor 340A, a gyro sensor 340B, a pressure sensor 340C, a magnetic sensor 340D, an acceleration sensor 340E, a grip sensor 340F, a proximity sensor 340G, a color sensor 340H (e.g., RGB sensor), a biometric sensor 340I, a temperature/humidity sensor 340J, an illumination sensor 340K, and a ultraviolet (UV) sensor 340M. Additionally or alternatively, the sensor module 340 may include an e-nose sensor (not shown), an electromyography (EMG) sensor (not shown), an electroencephalogram (EEG) sensor (not shown), an electrocardiogram (ECG) sensor (not shown), or a fingerprint sensor. The sensor module 340 may further include a control circuit for controlling at least one sensor included therein. In some embodiment, the electronic device 301 may further include a processor configured to control the sensor module 340 as part of or separately from the processor 310, to control the sensor module 340 during a sleep state of the processor 310.

The input device 350 may include a touch panel 352, a (digital) pen sensor 354, a key 356, or an ultrasonic input device 358. The touch panel 352 may use at least one of a capacitive type, a resistive type, an IR type, or an ultrasonic type. The touch panel 352 may further include a control circuit. The touch panel 352 may further include a tactile layer to provide tactile reaction to the user.

The (digital) pen sensor 354 may include a recognition sheet which is a part of the touch panel 352 or a separate recognition sheet. The key 356 may also include a physical button, an optical key, or a keypad. The ultrasonic input device 1858 senses ultrasonic waves generated in an input means through a microphone (e.g., the microphone 388) to check data corresponding to the sensed ultrasonic waves.

The display 360 (e.g., the display 260) may include a panel 362, a hologram device 364, or a projector 366. The panel 362 may have a configuration that is the same as or similar to that of the display 260 of FIG. 2. The panel 362 may be implemented to be flexible, transparent, or wearable. The panel 362 may be configured with the touch panel 352 in one module. The hologram device 364 shows a stereoscopic image in the air by using interference of light. The projector 366 displays an image onto an external screen through projection of light. The screen may be positioned inside or outside the electronic device 301. According to an embodiment, the display 360 may further include a control circuit for controlling the panel 362, the hologram device 364, or the projector 366.

The interface 370 may include an HDMI 372, a universal serial bus (USB) 374, an optical communication 376, or a D-subminiature 378. The interface 370 may be included in the communication interface 270 illustrated in FIG. 2. Additionally or alternatively, the interface 370 may include a mobile high-definition link (MHL) interface, an SD/MMC interface, or an infrared data association (IrDA) interface.

The audio module 380 bi-directionally converts sound and an electric signal. At least one element of the audio module 380 may be included in the I/O interface 250 illustrated in FIG. 2. The audio module 380 processes sound information input or output through the speaker 382, the receiver 384, the earphone 386, or the microphone 388.

The camera module 391 is a device capable of capturing a still image or a moving image, and according to an embodiment, may include one or more image sensors (e.g., a front sensor or a rear sensor), a lens, an image signal processor (ISP), or a flash (e.g., an LED or a xenon lamp).

The power management module 395 manages the power supply of the electronic device 301. According to an embodiment, the power management module 395 may include a Power management integrated circuit (PMIC), a charger IC, or a battery fuel gauge. The PMIC may have a wired and/or wireless charging scheme. The wireless charging scheme includes a magnetic-resonance type, a magnetic induction type, and an electromagnetic type, and for wireless charging, an additional circuit, for example, a coil loop, a resonance circuit, or a rectifier may be further included. The battery gauge measures the remaining capacity of the battery 396 or the voltage, current, or temperature of the battery 396 during charging. The battery 396 may include a rechargeable battery and/or a solar battery.

The indicator 397 displays a particular state, for example, a booting state, a message state, or a charging state, of the electronic device 201 or a part thereof (e.g., the processor 310). The motor 398 converts an electric signal into mechanical vibration or generates vibration or a haptic effect. Although not shown, the electronic device 301 may include a processing device (e.g., a GPU) for supporting a mobile TV. The processing device for supporting the mobile TV processes media data according to, a standard such as digital multimedia broadcasting (DMB), digital video broadcasting (DVB), or mediaFlo^{™}.

Each of the foregoing elements described herein may include one or more components, and a name of the part may vary with a type of the electronic device 2001. The electronic device according to the present disclosure may include at least one of the foregoing elements, and some of the elements may be omitted therefrom or other elements may be further included therein. As some of the elements of the electronic device according to the present disclosure are coupled into one entity, the same function as those of the elements that have not been coupled may be performed.

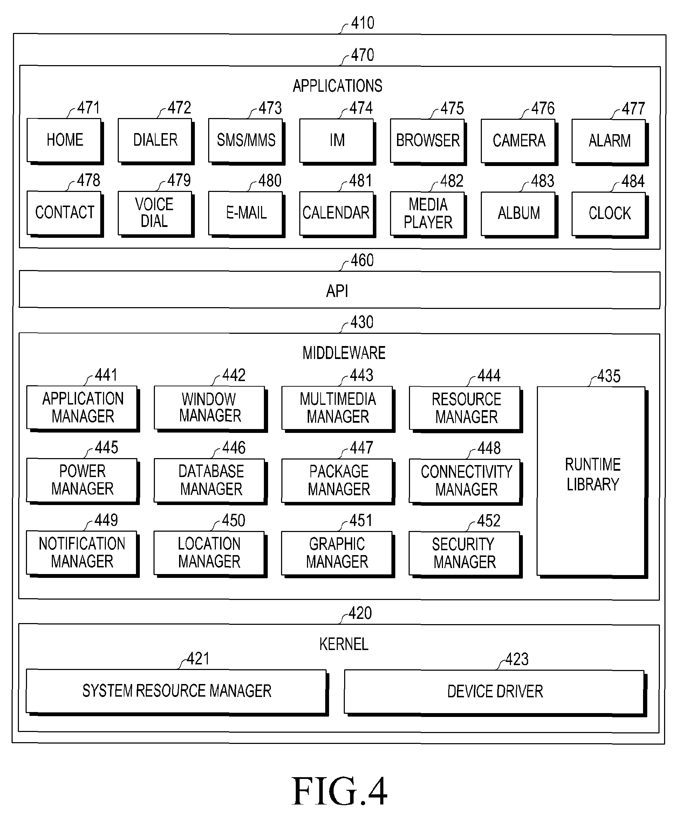

FIG. 4 is a block diagram of an example of a programming module according to various embodiments of the present disclosure. According to an embodiment of the present disclosure, a programming module 410 (e.g., the program 240) may include an OS for controlling resources associated with an electronic device (e.g., the electronic device 201) and/or various applications (e.g., the application programs 247) executed on the OS. The OS may include Android, iOS, Windows, Symbian, Tizen, or Bada.

The programming module 410 may include a kernel 420, a middleware 430, an application programming interface (API) 460, and/or an application 470. At least a part of the programming module 410 may be preloaded on an electronic device or may be downloaded from an external electronic device (e.g., the electronic device 202 or 204 or the server 206).

The kernel 420 (e.g., the kernel 241) may include a system resource manager 421 and/or a device driver 423. The system resource manager 421 may perform control, allocation, or retrieval of system resources. According to an embodiment, the system resource manager 421 may include a process management unit, a memory management unit, or a file system. The device driver 423 may include, for example, a display driver, a camera driver, a Bluetooth driver, a shared memory driver, a USB driver, a keypad driver, a WiFi driver, an audio driver, or an inter-process communication (IPC) driver.

The middleware 430 may provide functions that the application 470 commonly requires or provide various functions to the application 470 through the API 460 to allow the application 470 to efficiently use a limited system resource in an electronic device. According to an embodiment, the middleware 430 (e.g., the middleware 243) may include at least one of a runtime library 435, an application manager 441, a window manager 442, a multimedia manager 443, a resource manager 444, a power manager 445, a database manager 446, a package manager 447, a connectivity manager 448, a notification manager 449, a location manager 450, a graphic manager 451, and a security manager 452.

The runtime library 435 may include a library module that a compiler uses to add a new function through a programming language while the application 470 is executed. The runtime library 435 performs functions relating to an I/O, memory management, or calculation operation.

The application manager 441 manages a lifecycle of at least one application among the applications 470. The window manager 442 manages a GUI resource using a screen. The multimedia manager 443 recognizes a format necessary for playing various media files and performs encoding or decoding on a media file by using a codec appropriate for a corresponding format. The resource manager 444 manages a resource such as source code, memory, or storage space of at least one application among the applications 470.

The power manager 445 manages a battery or power in operation with a basic input/output system (BIOS) and provides power information necessary for an operation of the electronic device. The database manager 446 performs a management operation to generate, search or change a database used for at least one application among the applications 470. The package manager 447 manages the installation or update of an application distributed in a package file format.

The connectivity manager 448 manages a wireless connection such as a WiFi or Bluetooth connection. The notification manager 449 displays or notifies events such as arrival messages, appointments, and proximity alerts in a manner that is not disruptive to a user. The location manager 450 manages location information of an electronic device. The graphic manager 451 manages a graphic effect to be provided to a user or a user interface (UI) related thereto. The security manager 452 provides a general security function necessary for system security or user authentication. According to an embodiment of the present disclosure, when an electronic device (e.g., the electronic device 201) has a call function, the middleware 430 may further include a telephony manager for managing a voice or video call function of the electronic device.

The middleware 430 may include a middleware module forming a combination of various functions of the above-mentioned internal elements. The middleware 430 may provide modules specified according to types of OS so as to provide distinctive functions. Additionally, the middleware 430 may delete some existing elements or add new elements dynamically.

The API 460 (e.g., the API 245) may be provided as a set of API programming functions with a different configuration according to the OS. In the case of Android or iOS, for example, one API set may be provided by each platform, and in the case of Tizen, two or more API sets may be provided.

The application 470 (e.g., the application program 247) may include one or more applications capable of providing a function, for example, a home application 471, a dialer application 472, a short messaging service/multimedia messaging service (SMS/MMS) application 473, an instant message (IM) application 474, a browser application 475, a camera application 476, an alarm application 477, a contact application 478, a voice dial application 479, an e-mail application 480, a calendar application 481, a media player application 482, an album application 483, a clock application 484, a healthcare application (e.g., an application for measuring an exercise amount or a blood sugar), or an environment information providing application (e.g., an application for providing air pressure, humidity, or temperature information). According to an embodiment of the present disclosure, the home application 471 may display an icon, a widget, or a text corresponding to one or more applications or contents installed in the electronic device 201 on the display 260.

According to an embodiment of the present disclosure, the application 470 may include an application (hereinafter, an "information exchange application" for convenience) supporting information exchange between the electronic device (e.g., the electronic device 201) and an external electronic device (e.g., the electronic device 202 or 204). The information exchange application may include, for example, a notification relay application for transferring specific information to the external electronic device or a device management application for managing the external electronic device.

For example, the notification relay application may include a function for transferring notification information generated in another application (e.g., an SMS/MMS application, an e-mail application, a healthcare application, or an environment information application) of the electronic device to an external electronic device (e.g., the electronic device 202 or 204). The notification relay application may receive notification information from an external electronic device to provide the same to a user.

The device management application may manage (e.g., install, remove, or update) at least one function (e.g., turn on/turn off of an external electronic device 202 or 204 itself (or a part thereof) or control of brightness (or resolution) of a display, a service provided by an application operating in an external electronic device (e.g., the electronic device) or provided by the external electronic device (e.g., a call service or a message service).

According to an embodiment, the application 470 may include an application (e.g., a healthcare application) designated according to an attribute of the external electronic device (e.g., a type of the electronic device being mobile medical equipment as the attribute of the electronic device). According to an embodiment, the application 470 may include an application received from the external electronic device (e.g., the server 206 or the electronic device 202 or 204). According to an embodiment, the application 470 may include a preloaded application or a third party application that may be downloaded from the server. Names of elements of the programming module 410 according to the illustrated embodiment may vary depending on a type of an OS.

According to various embodiments, at least a part of the programming module 410 may be implemented by software, firmware, hardware, or a combination of at least two of them. The at least a part of the programming module 410 may be implemented (e.g., executed) by a processor (e.g., the processor 310). The at least a part of the programming module 410 may include a module, a program, a routine, sets of instructions, or a process for performing one or more functions.

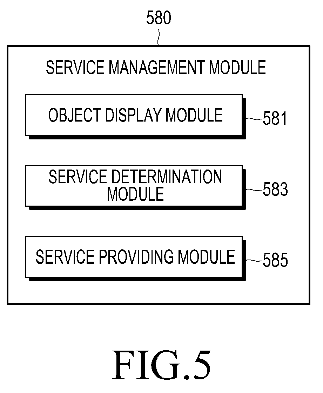

FIG. 5 is a block diagram of an example of a service management module (e.g., the service management module 280), according to various embodiments of the present disclosure. Hereinbelow, the same parts as or similar parts to those described with reference to FIGs. 1 through 4 will not be described again.

Referring to FIG. 5, a service management module 580 may include an object display module 581, a service determination module 583, and a service providing module 585. The object display module 581, the service determination module 583, or the service providing module 585 may be implemented in hardware, software executed by at least one processor, and/or a combination of hardware and software.

The object display module 581 displays content or a function through a display (e.g., the display 260) functionally connected with the electronic device. For example, the object display module 581 may display a first object including at least one content item or a second object capable of executing at least one function (e.g., a function or an application of the electronic device).

For example, if a new picture is obtained by the electronic device, the object display module 581 may (automatically) present a first object including the new picture on the display. In another example, if a new application is installed in the electronic device automatically or by a user input, the object display module 581 may execute the new application and display a second object including an image, an icon, or a text for distinguishing the new application from other applications on the display. While a description has been provided regarding the display of an object corresponding to content or a function that is newly obtained for convenience, an object corresponding to existing content or function that is previously stored in the electronic device, as well as an object corresponding to the newly obtained content of function, may also be displayed on the display.

According to an embodiment of the present disclosure, the object display module 581 may display an object for adjusting a screen brightness of the electronic device and a volume of a speaker of the electronic device, limiting at least some functions of the electronic device, or adjusting or executing a camera function on the display. The functions of the electronic device are not limited to the foregoing examples, and may include other functions currently implemented in the electronic device and newly added functions of the electronic device based on advances in the electronic device.

According to an embodiment of the present disclosure, the object display module 581 may display one or more objects on a home screen. The home screen may be a screen having a background and at least some of icons, widgets, or labels corresponding to one or more applications. For example, the home screen may include a screen for inputting a password, a secret pattern, or a fingerprint to authenticate a user. The home screen may include a screen displayed when a home button is pressed or activated.

According to an embodiment of the present disclosure, the object display module 581 selects a position in the display where an object corresponding to content or a function is to be displayed, based on a priority of the content or the function. For example, the object display module 581 may display a first object corresponding to first content having a higher priority, in a first area (e.g., a central area or an upper portion) of the display. On the other hand, the object display module 581 may display a second object, corresponding to a second content having a lower priority, in a second area (e.g., an edge portion or a lower portion) of the display.

According to an embodiment of the present disclosure, the object display module 581 may change the position on the display where the first object and/or the second object are displayed, for example, automatically, if the priority of the first object or the second object is changed. For example, the priority of the second object becomes higher than the priority of the first object, the object display module 581 may move the second object to the central area of the display, while also moving the first object to the edge portion of the display. According to an embodiment of the present disclosure, a function of automatically changing a position of an object may be limited by user's setting.

According to an embodiment of the present disclosure, the object display module 581 may vary the size of each of the one or more objects based on a priority of the object. For example, a size of the first object having the higher priority may be displayed in a first size (e.g., about 100% of a maximum horizontal length of the display × about 20% of a maximum vertical length of the display), and a size of the second object having the lower priority may be displayed in a second size (e.g., about 50% of the maximum horizontal length of the display × about 10% of the maximum vertical length of the display). According to an embodiment of the present disclosure, if the priorities of the first object and the second object are changed, the object display module 581 automatically resize the first and/or second objects.

According to an embodiment of the present disclosure, a priority of an object may be determined based on, for example, at least one of a user's preference with respect to the object, importance/field/type of contents or a function, setting information of the electronic device, and state information of the electronic device. By way of example, the user's preference may indicate how frequently the user uses the object, how much the object is related to other contents used by the user through the electronic device, or how much the object is closely related to user's memo or schedule stored in the electronic device (or an external device used by the user).

The importance of the content may indicate the extent to which the content is useful and important, and may be provided to a user based on the user's body information (e.g., a height, a weight, or an eyesight), biometric information (e.g., brain waves, pulses, a blood sugar level, or a heart rate), or user's preference (e.g., the frequency of use, an exercise plan that is set by the user, user's hobby, or a purchase history). For example, if the user's biometric information measurement result falls within an abnormal range, the importance of content related to the biometric information may be set higher than content related to other biometric information.

The importance of the content may vary, for example, according to an extent to which the content matches one or more keywords that are specified by the user of the electronic device.

The setting information may indicate that the user assigns a particular priority to a particular content in the electronic device. For example, if the user assigns the highest priority to a particular content that includes a particular keyword, the object display module 581 may display the particular content with a visual attribute that is different from those of other objects displayed on the display. For example, displaying the particular content with a different visual attribute, may include displaying the content in a larger size, darker (or brighter) colors, and/or at a location that is closer to the center of the display. The different visual attribute may be displayed without considering other conditions.

By way of example, the state information of the electronic device may include one or more of an indication of a battery capacity, an indication of a memory capacity, and/or an indication of the current temperature of the electronic device. If an available capacity of the memory is about 80%, the object display module 581 may give the same priority to one or more objects or may give a higher priority to a particular object, taking the other conditions into account. On the other hand, if an available capacity of the memory is about 10%, the object display module 581 may give a higher priority to an object corresponding to content or a function that uses a smaller portion of the memory and may give a lower priority to an object corresponding to content or a function that uses a greater portion of the memory. According to an embodiment of the present disclosure, the number or positions of objects to be displayed may be varied based on the object's respective priorities, the remaining battery capacity, and/or memory capacity. For example, only a predetermined number of objects may be displayed, or only a portion of the display may be activated (e.g., by supplying power to only the portion of the display) such that only selected objects are displayed in the active portion of the display to reduce the amount of resource consumption of the electronic device.

According to an embodiment of the present disclosure, the object display module 581 displays at least a subset of selected content or function differently from the other part of the selected content or function, based on context information related to a user corresponding to the electronic device (e.g., the electronic device 201) or another user. By way of example, the context information may include at least one of an indication of a user's preference, body information, biometric information, recommendation information associated with the other user, state information, or information regarding the surrounding environment of the electronic device (*e.g.*, ambient temperature, *etc.*).

For example, a first object associated with a first content and a second object associated with a second content may be displayed on a display. If recommendation information indicating that the other user recommends the first content to the user is obtained from an external device or by input of the other user, the object display module 581 may cause the first content to flicker or shake slightly. Additionally or alternatively, the object display module may move the content to a more prominent position on the display (e.g., the center). Additionally or alternatively, the object display module 581 may not change at all the way in which the non-selected content is displayed.

According to an embodiment of the present disclosure, the first content may include an article related to the winter season and the second content may include an article related to the summer season. If the surrounding environment information of the electronic device indicates that the current season is winter, the object display module 581 may select the first content and change the manner in which the first content is displayed.

According to an embodiment of the present disclosure, the first content may include an article related to health risks caused by obesity and the second content may include shopping information. A body fat index of the user may be determined through a sensor functionally connected to the electronic device. When the body fat index indicates that the user is obese, the object display module 581 may display the first content differently from the second content, by changing various elements, such as a shadow, brightness, movement, or enlargement of the first content or a shape of the first object indicating the first content.

According to an embodiment of the present disclosure, the first object for executing a sound output function and the second object for adjusting screen brightness may be displayed on the display. If it is determined through an illumination sensor that the surrounding environment of the electronic device becomes dark abruptly, the object display module 581 may display the second object (or change the way in which the second object is displayed) by causing the second object to shake slightly.

While it has been described for convenience that one content or function corresponds to one object, one object may correspond to a plurality of contents or a plurality of functions according to various embodiments of the present disclosure. For example, a picture taken by the user and video received from a server (e.g., the server 206) may be displayed together in a first object. As another example, a second object may include a power interface component (e.g. a button for powering off the device) and a volume control interface component (e.g., slider for adjusting sound volume).

According to an embodiment of the present disclosure, both content and a function may correspond to one object. For example, an article may be displayed in a first partial area of a first object and a function for authenticating the user may be mapped to a second partial area of the first object. In another example, at least one function may be mapped to an image (or another type of content) which is displayed in the first object.

The service determination module 583 automatically identifies, at least one service related to an object. The service may be identified based on a content or a function that is part of (or other associated with) the object. The service may include an application (e.g., a related web page) capable of providing detailed information regarding the content (or function), an application (or function) capable of controlling a function of an external device related to the content (or function), or an application (or function) capable of determining a schedule of a user related to the content (or function) or measuring biometric information of the user.

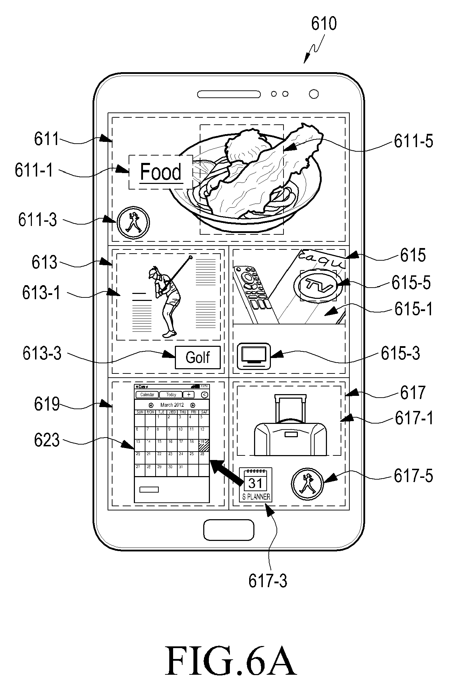

For example, if a spaghetti image is part of the content, the service determination module 583 analyzes an attribute of the image (e.g., a tag name called "carbonara spaghetti") to identify (e.g., select) a web page or application capable of providing specific calorie information for this type of food. The selection may be formed automatically (e.g., without user's selection). The service determination module 583 may also automatically determine an application capable of providing an obesity index of the user, calories taken in by the user today, or user's favorite restaurant, as a service for the content, based on the spaghetti image. Various services related to content are described in further detail with reference to FIGS. 6A through 6C.

According to an embodiment of the present disclosure, the service determination module 583 may further refer to another content or function corresponding to another object displayed on the display to identify the at least one service. For example, the service determination module 583 may identify the service related to the content, based on at least a first content item (or function) corresponding to the object and at least a second content item (or another function) corresponding to the other object.

For example, at least one service corresponding to an electronic magazine including a travel bag image displayed in the first object may be identified based on at least a portion of a second content item including airline information or travel agency information displayed. The second content item may be associated with the second object. If the service determination module 583 selects the service only based on the "travel bag image", the identified service may involve displaying of shopping mall information, connecting to an airline or travel agency website, or executing a scheduler. On the other hand, when a service for the electronic magazine is identified, if the travel agency information included in the second content item used together with the travel bag as a basis for identifying the service, the service determination module 583 may select a service for connecting to the airline website and/or the scheduler service.

In another example, a function for providing music playback may be mapped to a first object and a function for adjusting brightness may be mapped to a second object. In this case, if the first object and the second object are selected by user's input (e.g., dragging, flicking, pick & drop, a multi-touch, a pinch gesture, check box selection), the service determination module 583 identifies, based on the music providing function and the display brightness adjusting function, the application for automatically adjusting the brightness of the display according to music, as a service corresponding to the music providing function.

As noted above, the service determination module 583 may identify a service corresponding to an object based on content associated with one or more objects. To this end, the service determination module 583 may generate a search query by using the first portion corresponding to the object and the second portion corresponding to the other object. For example, the service determination module 583 may generate a search word "travel schedule" based on the "travel picture image", which is the first portion of the object, and the "travel agency", which is the second portion of the another object.

According to an embodiment of the present disclosure, the service determination module 583 may finally select as the service an airline browser that provides airplane schedule information or a scheduler application that provides schedule information of the user of the electronic device based on the search query of "travel schedule".

According to an embodiment of the present disclosure, the other object may be selected by a user input. For example, if the user selects a first object as the object and a second object as the another object, the service determination module 583 may determine at least one service corresponding to the first object or the second object based on functions or contents included in the first object and the second object. The user input may include a gesture of moving the second object to the first object, a gesture of simultaneously touching the first object and the second object at least for a while, and a gesture of moving the first object and the second object to a particular area (e.g., a central area, an edge area, or a corner area) of the display by simultaneously touching the first object and the second object at least for a while.

According to an embodiment of the present disclosure, the service determination module 583 may identify a service related to the object based on at least one of an order, a direction, and a pressure in which the user input is applied to one of the object or the another object. For example, the first object and the second object may be displayed on the display. If the user touches the first object and then touches the second object, the service determination module 583 may identify a service related to the second object based on at least a subset of content or a function corresponding to the first object.

In another example, if the user makes a gesture of moving the second object to the first object on the display, the service determination module 583 may identify a service related to the first object based on content or a function corresponding to the second object. On the other hand, if a gesture of moving the first object to the second object is performed, the service determination module 583 may determine the service related to the second object based on content or a function corresponding to the first object.

In another example, if a first pressure is obtained in the first object and a second pressure higher than the first pressure is obtained in the second object, then the service determination module 583 may identify a service related to the second object by further referring to content or a function corresponding to the first object. On the other hand, if the first pressure is higher than the second pressure, the service determination module 583 may identify a service related to the first object by further referring to content or a function corresponding to the second object.

According to an embodiment of the present disclosure, the service determination module 583 identify a service related to the object, further based on signals from one of one or more sensors included in the electronic device and/or an external device. For example, content including an article about a heart rate with respect to an obesity index may be displayed in the object. In this case, if a sensor (e.g., PPG/ECG, a body mass index (BMI), or the like) for measuring user's obesity index and heart rate is included in an electronic device (e.g., the electronic device 101), the service determination module 583 may select an application for measuring user's obesity and heart rate as the service to be performed.

On the other hand, if a sensor (e.g., a PPG or an ECG) capable of measuring only a heart rate is included in the electronic device, the service determination module 583 may select the application capable of measuring heart rate only as the service to be performed. As another example, a sensor capable of measuring a user's body mass index may be included in an external device functionally connected with the electronic device. For example, a sensor for measuring a heart rate may be included in the electronic device, and a sensor for measuring an obesity index may be included in an electronic watch or another external device. In such, the service determination module 583 may determine an application capable of measuring both the obesity index and the heart rate as a service for the object. Thus, the service may be identified by the service determination module 538 based on the type of sensor(s) that are available in the electronic device and/or the type of sensor(s) available in one or more external devices.

According to an embodiment of the present disclosure, to identify a service corresponding to content or a function displayed in at least one object, the service determination module 583 may identify (e.g., analyze) detailed information associated with the function or content. For example, the service determination module 583 may identify detailed information including an image, a text, or a symbol included in one or more objects. For example, the service determination module 583 may also determine a service according to a search query that is generated based on the detailed information. For example, the detailed information may include at least one of a text or an image included as a subset of the content, an attribute of the content (e.g., a file format, a file size, a creation time, or creator information), a field, a theme, a keyword, and a summary of the content, as the detailed information of the content.

According to an embodiment of the present disclosure, the service determination module 583 may analyze metadata included in a content file and obtain (e.g., extracts) the detailed information from the content file. The metadata may include information identifying, for example, a format, a title, a creation date, or a size of the content. According to an embodiment of the present disclosure, the electronic device (e.g., the electronic device 201) may use the metadata to quickly find out content having a particular attribute desired by the user.

Any suitable type of metadata may be used. For example, the metadata may include an exchangeable image file format (EXIF), an ID3 tag, or a hypertext markup language (HTML) tag. If the content is an image, the metadata, for example, the EXIF, may include a creation time, a color space, global positioning system (GPS) information, a thumbnail image, a face recognition tag, or a name of a person who captures an image. If the content is music, the metadata, for example, the ID3 tag or the ape tag, may include a title of the music, a singer's name, a composer, album information, track information, a genre, an album image, a creation date, or a creation time.

If the content is video, the metadata may include a title, a description, an issue date, a playback length, a resolution, codec information, a thumbnail, or a creator. If the content is a webpage, an 'html' tag as the metadata may include a text (e.g., a title, a keyword, a date, or details), an image, or video information. The metadata may be stored in any suitable manner. For example, the metadata may be included in a content file or stored in a separate file. In some implementations, the metadata may be received by the electronic device from a remote source.

According to an embodiment of the present disclosure, the service determination module 583 identifies (e.g., extracts) a category of the content. A field of the content may include, e.g., health, sport, cook, fashion, art, literature, current events, travel, advertisement, religion, or science. The field of the content may be the same as or different from the field of an application in which the content is executed.

According to an embodiment of the present disclosure, the service determination module 583 may extract text from the content by using a character recognition module or an optical character recognition (OCR) module. For example, the content (e.g., an article) may be an image including the text "swing like flowing water". In this case, the service determination module 583 may extract the text "swing like flowing water" from the image by using the OCR module.

According to an embodiment of the present disclosure, the service determination module 583 summarizes details regarding the content or extracts a keyword associated with the content by performing at least one of a natural language processing (NLP) and/or statistical analysis on text included in the content. According to an embodiment of the present disclosure, the service determination module 583 may convert voice in video content into a text by using speech-to-text (STT) conversion or may extract a text by using a subtitle recognition module. In this case, the service determination module 583 may summarize details regarding the content or extract a keyword associated with the content based on the converted or extracted text.

According to an embodiment of the present disclosure, if the content (e.g., the article) is provided on a webpage, the service determination module 583 may extract a text from the body of the webpage. The body may be identified by based on the HTML tags of the webpage. The service determination module 583 may generate a summary (or signature) corresponding to the content based on a text extracted from the body part. To this end, the electronic device may include, for example, a character recognition module, an optical character reading module, a barcode/two-dimensional (2D) image code (a quick response (QR) code, a data matrix code, PDF-417, or a maxi code) recognition module, a voice recognition module, a face recognition module, an image decoder, a video decoder, an audio decoder, a document parser, a document summary module, or a subtitle recognition module.

According to an embodiment of the present disclosure, the service determination module 583 may use data regarding a context of the electronic device or the external electronic device as data related to the content. Thus, according to an embodiment of the present disclosure, the service determination module 583 may identify a service related to the content based on context data associated with the electronic device or the external electronic device. According to an embodiment of the present disclosure, the data regarding the context of the electronic device or the external electronic device may be stored in a reference table. The reference table may be stored at any suitable location. For example, the reference table may be stored in the memory of the electronic device. (e.g., the memory 230).

According to an embodiment of the present disclosure, the context data may include sensor information (e.g., a type, an operation state, or a measured data record) of the electronic device or the external electronic device, application installation information, specification information (e.g., hardware or software), location information, an operation history of the electronic device, statistic information, information (e.g., a stored location of the information and a size, a type, or a stored time of the information) stored in the server, user personal information, a content attribute (e.g., the number of references or an issue date), or a reference keyword. The reference table may further include data such as an identifier corresponding to the external electronic device or an indication of the state of a connection between the electronic device and the external electronic device.

According to an embodiment of the present disclosure, the service determination module 583 may identify the word "golf" as information associated with a content item. The service determination module 583 may then perform a search of a reference table based on the word "golf" to detect that a "golf application" is installed on the electronic device. As another example, the service determination module 583 may select as the service, an application for providing information regarding the sport of golf.

According to an embodiment of the present disclosure, the reference table may be stored in an electronic device (e.g., the electronic device 201), an external electronic device (e.g., the external electronic device 202), or a server (e.g., the server 206). The service determination module 583 may search the reference table stored in the external electronic device or the server by using a network (e.g., the network 262 or 264).

The service providing module 585 may provide at least one service related to an object to the user in association with the object. For example, the service providing module 585 may execute a service selected by the service determination module 583. The service providing module 585 may execute the service based in response to an input that is entered by a user of the electronic device or automatically. The service providing module 585 may display an execution screen showing an execution result of the service on the display.

To this end, the service providing module 585 displays a representation (capable of executing (e.g., launching) the service. The representation may include an image, a text, a symbol, or an icon indicating the service to distinguish the service selected in relation to the object from other services. If the user selects (touches or hovers over) the representation, the service providing module 585 may execute the service and display a screen associated with the service (e.g., application execution screen) on the display.

According to an embodiment of the present disclosure, the service providing module 585 may automatically execute the service without additional input from the user. For example, the service providing module 585 may execute the service as a background program of the electronic device. In some implementations, when executed as a background program, the service may be assigned a lower execution priority than one or more other services (e.g., applications that are being executed by the electronic device).. The background program may be a program that runs at all times regardless of time.

For example, even when the user uses another application (e.g., a music application), the service providing module 585 may execute a navigation application selected as a service of an object as a background program, thus receiving information identifying a position or speed of a vehicle. The service providing module 585 may display an execution screen corresponding to a position or speed of the vehicle on the display.

According to an embodiment of the present disclosure, the service providing module 585 may determine whether to present (e.g., provide) at least a subset of the content according to whether the execution result of the service (e.g., information generated as a result of executing the service) satisfies a specified condition. For example, if the execution result satisfies the condition, the service providing module 585 may output at least some of the content. On the other hand, if the execution result does not satisfy the specified condition, the service providing module 585 may refrain from outputting any portion of the content.

For example, the content may be a newspaper article (e.g., an online newspaper article, an online magazine article, or a downloaded document file) showing health information of a person in relation to an obesity index or a heart rate of the person. Based on the content, a health application for measuring a heart rate may be selected as the service. In this case, the health application may be automatically and continuously executed by the electronic device as a background program.

If the measured heart rate is higher than a threshold, such as a normal heart rate suggested in the newspaper article, then the service providing module 585 may display at least a portion of the newspaper article to the user. On the other hand, if the user's heart rate is the same as or similar with the normal heart rate and thus has a stable value, the service providing module 585 may not display the at least a subset of the newspaper article on the display. Thus, in some implementations, the electronic device may determine whether to display at least a portion of content used to select a service depending on whether information generated as a result of executing the service satisfies a condition that is based at least in part on the content. According to various embodiments of the present disclosure, the content or the execution result may be provided to the user through a sound, vibration, or fragrance.

According to an embodiment of the present disclosure, the service providing module 585 displays an execution screen corresponding to an execution result of a service in the object or in another object displayed on the display. In another example, the service providing module 585 may generate a new object (e.g., a window, a tile, or the like) capable of displaying the execution screen in response to the service being executed.

According to an embodiment of the present disclosure, the object may be presented in the form of a cube pyramid, a sphere, a regular tetrahedron, or a hexahedron having one or more sides. In this case, the service providing module 585 displays an object including content on a first side of the cubic figure and displays the execution screen of the service related to the object on a second side of the cubic figure.

According to an embodiment of the present disclosure, the service providing module 585 may display the execution screen by using a multi-window function. When the multi-window function is executed, the service providing module 585 may divide the display into two or more areas to separately control each area. For example, if the multi-window function is executed, the service providing module 585 may execute a first application in a first area of the display and at the same time, execute a second application in a second area of the display independently of the first application. According to an embodiment of the present disclosure, the service providing module 585 may continue displaying the object in the first area, while displaying the execution screen of the service in the second area.

According to an embodiment of the present disclosure, the service providing module 585 changes the execution screen of the service based on context information of the electronic device (e.g., the electronic device 201) or the external electronic device. For example, based on article content including information "A sinkhole is generated on OO highway", a "navigation application" may be executed. According to a change of a location of the electronic device situated in a moving vehicle, the service providing module 585 may change a surrounding environment corresponding to the location as a background screen of the navigation application on a real-time basis. In another example, if the ambient temperature at the location of the electronic device changes, the service providing module 585 may modify a color, a size, a shape, or a brightness of the execution screen based on the change (and/or the new temperature).

According to an embodiment of the present disclosure, the service providing module 585 transmits a subset of content to an external electronic device selected based on a service corresponding to the content. According to an embodiment of the present disclosure, the service providing module 585 may select an external electronic device from among a plurality of external devices based on a characteristic of a portion of the content. The characteristic may include one or more of resolution, size, or type of the content portion.

For example, the content may be movie content including a first portion having a high resolution and a second portion having a low resolution. Based on the movie content, an external device search application may be selected as a service corresponding to an object in which the movie content is displayed. When the external device search application is executing, the service providing module 585 may provide the user with information about one or more external devices connected to the electronic device or located in proximity to the electronic device (e.g., a location of each external device, connection or non-connection with the electronic device, a type, or hardware information).

Afterwards, the service providing module 585 may select a particular external device capable of supporting the high resolution of the first content from among the found one or more external devices. In this case, the service providing module 585 may transmit the first content portion to the selected external device for display.

According to an embodiment of the present disclosure, the service providing module 585 transmits information related to a service corresponding to an object to an external electronic device and request the external device to execute at least a subset of the service through the external electronic device. For example, a web browser including information about recently released movies and ranks of the movies may be displayed in the object. Based on the keyword "movie", a multimedia application for playing any one of the movies may be executed as a service corresponding to the object. In this case, to provide a high-quality sound to the user, the service providing module 585 may transmit, over a network, information about a type of the selected service, a service requested to be supported (e.g., sound output), or at least a subset (e.g., a sound) of selected movie content, as information related to the service, to an external device which has better speaker performance than the electronic device and is connected over the network.

FIG. 6A is a diagram of an example of a user interface, according to aspects of the disclosure. Referring to FIG. 6A, a plurality of objects 611, 613, 615, and 617 corresponding to contents or functions may be displayed on a display 610 of an electronic device.

For example, an electronic magazine transmitted from an external device (e.g., the electronic device 202 or 204 or the server 206) may correspond to a first object 611. The electronic magazine may include an image showing food or a text "Food" 611-1. Thus, the electronic device (e.g., the electronic device 201) may display a first representation 611-3 for executing a health application. The health application may be a service related to the electronic magazine, and it may be selected based on the presence of the word "Food" 611-1, in the first object 611. When executed, the health application may provide the user with, for example, information about food calories of a spaghetti image 611-5 displayed in the electronic magazine, total calorie intake of the user for the day, or an exercise recommended for the user.

A golf picture 613-1 taken by the user of the electronic device may be displayed in a second object 613. According to an embodiment of the present disclosure, additional information regarding the golf picture 613-1 (e.g., a date when the picture was taken, a picture size, a person taking the picture, or weather information on the date in which the picture was taken) may be displayed together with the golf picture 613-1 in the second object 613. According to an embodiment of the present disclosure, a second representation 613-3 for executing a sports application 613-3may also be displayed in the second object 613. The sports application 613-3 may be a service related to the golf picture 613-1 and selected based on the golf picture 613-1, The sports application 613-3 may provide the user with, for example, date information corresponding to a weather that is suitable for playing golf, calories consumed per hour, or user's sports of interest.

An image 615-1 received from an external device may be displayed in a third object 615. According to an embodiment of the present disclosure, the third object 615 may be automatically generated in response to the receipt of the image 615-1 and displayed on the display 610 after it is generated. A third representation 615-3 for executing an "external device control application may be displayed in the third object 615. The external device control application may be a service related to the image 615-1 based on a text "TV" 615-5 included in the image 615-1. The external device control application may provide various functions for controlling an external electronic device, such as a power on/off function, a volume control function, a screen brightness adjustment function, or a channel change function.

According to an embodiment of the present disclosure, the external device control application may provide the user with information about one or more external devices which are located in proximity to the electronic device and are connected with the electronic device through a home network. For example, the external device control application may provide the user with a location and current state of each of the external devices, a function provided by each external device, or a state of connection of each external device with the electronic device.

A shopping mall browser providing an Internet shopping function may be displayed in a fourth object 617. The shopping mall browser may include a "travel bag" image 617-1. According to an embodiment of the present disclosure, in the fourth object 617, a keyword of travel package information (e.g., a "tourist site", a "tour route", a "place to stay", or "the number of days to stay") may be displayed in text form in a lower portion of a shopping mall browser screen. According to an embodiment of the present disclosure, a fourth representation 617-3 for executing a scheduler application and a fifth representation 617-5 for executing a health application providing may be displayed together with the travel bag image 617-1. Any of the schedule application and the travel application may be a service that is selected based on the travel package information or the travel bag image 617-1.

According to an embodiment of the present disclosure, if the user selects the fourth representation 617-3, a scheduler application corresponding to the fourth representation 617-3 may be executed. An execution screen 623 where the scheduler application is executed may be displayed in a fifth object 619. According to an embodiment of the present disclosure, the fifth object 619 may be automatically generated in response to the scheduler application being executed. For example, the fifth object 619 may not be displayed on the display 610 until execution of the scheduler application is requested.

According to an embodiment of the present disclosure, although not shown, the fifth object 619 may include content or a function that is associated with the fourth object prior to the schedule application being executed. For example, in instances in which the fifth object 619 is generated prior to the scheduler application being executed, content displayed in the fifth object 619 may be hidden and replaced with the execution screen of the scheduler application.

According to an embodiment of the present disclosure, at least one, for displaying the scheduler application, of the first through fifth objects 611, 613, 615, 617, and 619 displayed on the display 610 may be automatically selected based on respective priorities of the first through fifth objects 611-619. In some implementations, the priorities may be assigned based on the age of the information associated with each of the objects, such that objects including newer information are given a higher priority. For example, if content displayed in the first object 611 is the newest information and content displayed in the fifth object 619 is the oldest information, the scheduler application may be displayed in the fifth object 619 because this object may be assigned the lowest priority.

In another example, the respective priority of each object may be assigned based on the frequency at which the user interacts with content corresponding to the object. If the user views (or otherwise interacts with) golf content corresponding the second object 613 about five times and views (or otherwise interacts with) a shopping mall browser displayed in the fourth object 617 about ten times, the scheduler application may be displayed in the second object 613 and not in the fourth object 617 because the second object 613 is assigned a lower priority. The priorities of the first through fifth objects 611 through 619 displayed on the display 610 may be determined variously, for example, based on a used memory capacity, a power consumption, or a user preference as well as a creation time of the content or the number of times content is referred to.

According to an embodiment of the present disclosure, to provide a service related to each object's respective content or function, the first through fifth representations 611-3, 613-3, 615-3, 617-3, and 617-5 may be displayed on the display 610. If the user selects a particular representation, a service corresponding to the representation is executed in FIG. 6A. As discussed above, according to various embodiments of the present disclosure, the service may be automatically executed based on context information of the electronic device or user's setting.

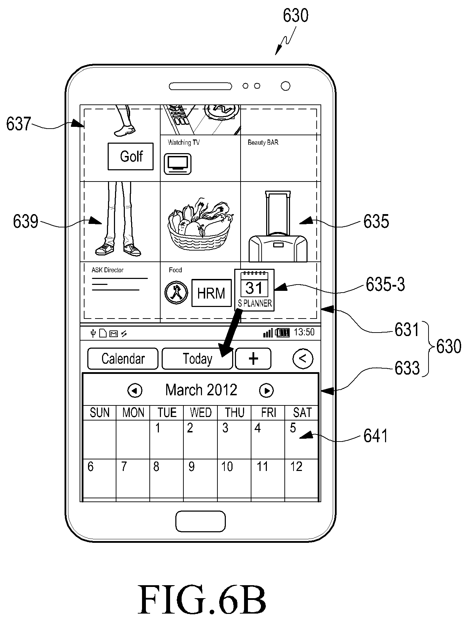

FIG. 6B is a diagram of an example of a user interface, according to various embodiments of the present disclosure. A description of a part that is the same as or similar with that described with reference to FIG. 6A will not be provided. According to an embodiment of the present disclosure, a service related to content or a function may be displayed using multiple windows on a display 630 (e.g., the display 260).

According to an embodiment of the present disclosure, if the user selects a scheduler representation 635-3 of a first object 635, multiple windows may be presented on the display 630. As illustrated, a first window 631 and a second window 633 may be displayed. According to an embodiment of the present disclosure, the second window 633 may be automatically generated in a lower portion of the display 630, when a scheduler application corresponding to the scheduler representation 635-3 is executed, an execution screen 641 of the scheduler application may be displayed in the second window 633.

For example, in response to a request for executing the scheduler application, a display screen of the display 630 may be automatically divided into the windows 631 and 633. Afterwards, the display of objects 637 may be continued in the first window 631 and the execution screen 641 of the scheduler application may be displayed in the second window 633. In operation, the user may interact with the plurality of objects 637 through the first window 631 in the upper portion and control an application related to at least one of the plurality of objects 637 through the second window 633 in the lower portion.

According to an embodiment of the present disclosure, the first window 631 may shrink by the size of the area occupied by the second window 633 in order to free space for the second window 633 to be displayed in the lower portion of the display 630. When the size of the first window 631 is reduced, at least some of the plurality of objects 637 (e.g., the first object 611) may be hidden. According to an embodiment of the present disclosure, the user may control the first window 631 and the second window 633 at the same time through a touch (or hovering) input. For example, if the user touches the first window 631 in the upper portion and makes a scroll-down gesture, then the plurality of objects 637 may be scrolled, and at least some of the hidden objects may appear in an upper area of the first window 631.

According to an embodiment of the present disclosure, updated content may be newly-displayed in the first window 631. For example, fashion-related content may be periodically updated in a second object 639 displaying a fashion magazine, such that updated content may be newly displayed in the second object 639. Although not shown, according to an embodiment of the present disclosure, an object for displaying new content or a new function may be newly generated and displayed on the display 630. According to an embodiment of the present disclosure, the object displayed on the display 630 may be deleted by a user input or automatically.

An electronic device according to various embodiments of the present disclosure may include a memory for storing information associated with one or more services and a service management module implementable with a processor, and the service management module may display an object corresponding to content or a function on a display, determine a service related to the object from among the one or more services at least based on the function or content, and provide the service in relation to the object.

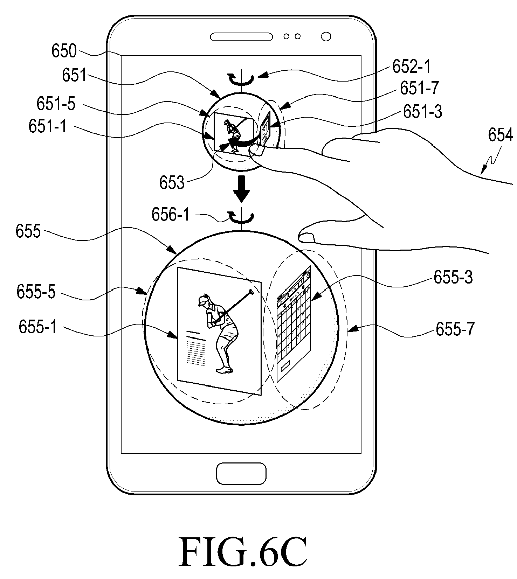

FIG. 6C is a diagram of an example of a user interface, according to various embodiments of the present disclosure. A description of a part that is the same as or similar with that described with reference to FIGS. 6A and 6B will not be provided. According to an embodiment of the present disclosure, an object may be displayed in various forms (e.g., a quadrangular form, a triangular form, a circular form, a spherical form, a conical form, or a rectangular parallelepiped form) on a display 650 (e.g., the display 260).

For example, referring to FIG. 6A, the plurality of objects 611, 613, 615, 617, and 619 may be displayed in a 2D quadrangular form. Inside these objects, the images 611-3, 613-1, 615-1, and 617-1 or the text labels 611-1 and 615-5 related to contents or functions may be displayed. The plurality of representations 611-3, 613-3, 615-3, 617-3, and 617-5 may be additionally superimposed on the images 611-3, 613-1, 615-1, and 617-1 and/or the text labels 611-1 and 615-5.

On the other hand, referring to FIG. 6C, the plurality of objects 651 and 655 may be displayed in a 3D "spherical form" on the display 650. According to an embodiment of the present disclosure, each object may be rotated in response to an input of a user 654 or automatically, the objects 651 and 655 may be shown to the user 654 as if they rotate. Thus, the user 654 may identify at least one of an image 651-1 (or a text) corresponding to content or a function, a representation 651-3 corresponding to the function or content, the content, the function, or a service corresponding to the function or content, which are displayed in various positions in the objects 651 and 655.

For example, although not shown, the golf image 651-1 included in the golf magazine may be displayed in a first area 651-5 of the interface section 651. Based on an input 653 (performed in the first area 651-5 of the first object 651 by the user 654 (*e.g.*, a right to left dragging gesture), the first object 651 may be rotated in a direction 652-1 corresponding to the input 653 (*e.g.* to the right). Thus, as shown in FIG. 6C, the golf image 651-1 rotates together with the interface element 651 in the direction 652-1. The golf image 651-1, which is at first hidden, may be displayed in a second area 651-7 of the first object 651 when the first object 551 is rotated. In addition to the golf image 651-1, a representation 651-3 for executing a related scheduler application may also be displayed.

According to an embodiment of the present disclosure, the second object 655 may include one or more execution screens that are displayed in response to input to representations displayed in the first object 651. According to an embodiment of the present disclosure, the first execution screen 655-1 of the article viewer application for viewing the golf magazine corresponding to the golf image 651-1 displayed in the first object 651 and the second execution screen 655-3 of the scheduler application corresponding to the representation 651-3 displayed in the first object 651 may be provided in the second object 655.

According to an embodiment of the present disclosure, in areas of the second object 655, which correspond to the areas of the first object 650 where the golf image 651-1 and the representation 651-7 are displayed, the first execution screen 655-1 corresponding to the golf image 651-1 and the second execution screen 655-3 corresponding to the representation 651-3 may be displayed. For example, the first execution screen 655-1 may be displayed in a third area 655-5 (e.g., a left area) of the second object 655, which corresponds to the first area 651-5 (e.g., a left area) of the first object 651 where the golf image 651-1 is displayed. The second execution screen 655-3 may be displayed in a fourth area 655-7 (e.g., a right area) of the second object 655, which corresponds to the second area 651-7 (e.g., a right area) of the first object 651 displaying the representation 651-3.

According to an embodiment of the present disclosure, the object 655 may be rotated based on an input performed on the object 651. For example, the second object 655 may be rotated in a direction 656-1 that is the same as or similar with a rotation direction 652-1 of the first object 651 and may be displayed on the display 650. For example, if the first object 651 rotates in the direction 652-1 (e.g., about 30° in a clockwise direction) corresponding to the input 653 of the user 654, the second object 655 may rotate in the same direction 656-1 as the direction 652-1.

Although not shown, before the first object 651 is rotated, the golf image 651-1 may be displayed in the first object 651. In this case, the second object 655 displayed based on an input of the user 654 with respect to the first object 651 may be displayed on the display 650 without being rotated. Thus, the first execution screen 655-1 corresponding to the golf image 651-1 is displayed in the second object 655 on the display 650.

On the other hand, as shown in FIG. 6C, the first object 651 may be rotated, such that the golf image 651-1 and the representation 651-7 may be displayed in the first object 651. In this case, the second object 655 displayed based on an input of the user 654 with respect to the first object 651 may be rotated in a manner that is the same as or similar to the first object 651. Thus, the first execution screen 655-1 corresponding to the golf image 651-1 and the second execution screen 655-3 corresponding to the representation 651-3 may be displayed in the second object 655.

According to an embodiment of the present disclosure, the second object 655 may be displayed differently from the first object 651 so as to be distinguished from the first object 651. For example, the second object 655 may be displayed larger than the first object 651. Although not shown, according to an embodiment of the present disclosure, the second object 655 may be displayed in color, transparency, and form that are different from those of the first object 651.

According to an embodiment of the present disclosure, based on displaying of the second object 655 on the display 650, at least one of size, color, transparency, and form of the first object 651 may be changed. According to an embodiment of the present disclosure, the first object 651 may be hidden from the display 650 when the second object 655 is displayed.

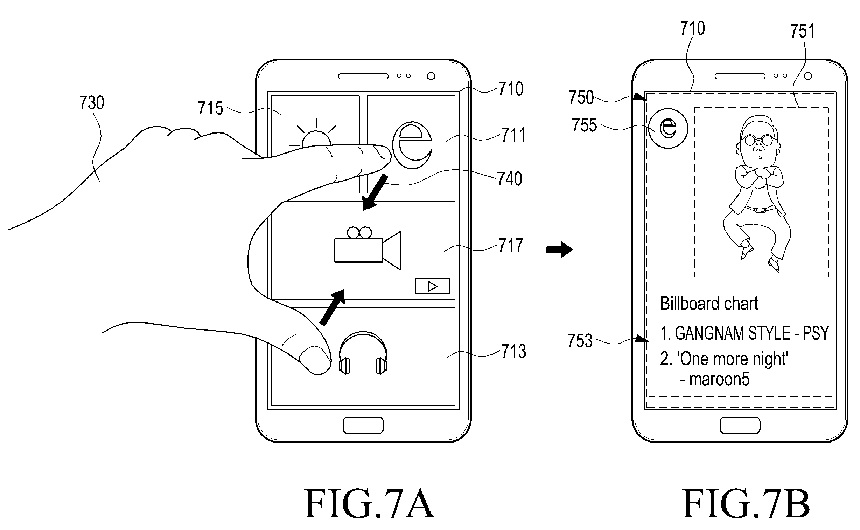

FIGS. 7A and 7B are diagrams of an example of a user interface, according to various embodiments of the present disclosure. Referring to FIG. 7A, according to an embodiment of the present disclosure, a first object 711 for executing an Internet-related application, and a second object 713 for providing music playback, a third object 715 for changing system settings of the electronic device, and a fourth object 717 for executing a camera function may be displayed on a display 710 (e.g., the display 260).

Referring FIG. 7A, user 730 may touch a first object 711 capable of executing an Internet-related application with a first finger while at the same time touching a second object 713 with a second finger to perform a pinch gesture 740, as shown.

Referring FIG. 7B, in response to the pinch gesture 740 of the user 730, a music search application may be automatically executed. The music search application may be selected for execution based on the Internet function corresponding to the first object 711 and the music play function corresponding to the second object 713. An execution screen 750 of the music search application may be accordingly displayed on the display 710. For example, the execution screen 750 may include an image 751 capable of playing music videos or music which the user 730 frequently listens to or a music chart 753. According to an embodiment of the present disclosure, the execution screen 750 may further include an icon 755 (or another type of input component) for executing the Internet-related application to allow the user 730 to further search for another song or view detailed information related to music information provided on the execution screen 750.

For example, based on the first object 711 (e.g., an Internet-related application), the electronic device (e.g., the electronic device 201) may identify a web page the user 730 frequently visits or a search word the user 730 frequently uses in search queries made by the user. Based on the second object 713 (e.g., the music play application), the electronic device may also identify information about, for example, music or a music streaming service which the user 730 frequently listens to.

According to an embodiment of the present disclosure, the electronic device may select at least one service corresponding to at least one of the first object 711 and the second object 713 as a music search application based on a combination of information of a music application and information of a browser application.

According to an embodiment of the present disclosure, although not shown, if the user 730 selects the first object 711 for executing the Internet-related application and the third object 715 for displaying a "system setting menu" for changing system settings, a function capable of changing Internet settings may be identified as a service corresponding to at least one of the first object 711 and the third object 713.

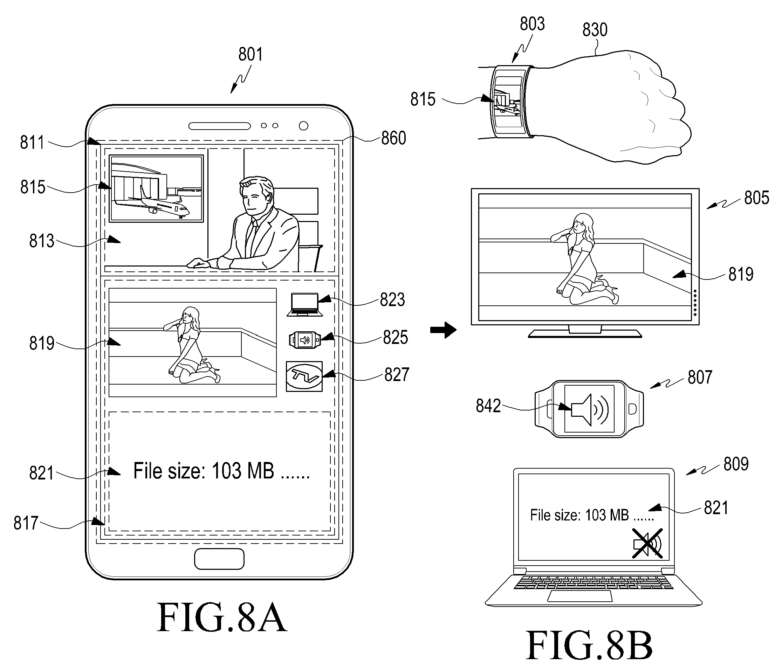

FIG. 8 is a diagram of an example of a user interface, according to various embodiments of the present disclosure. As illustrated in FIG. 8, an electronic device 801 may display a first object 811 and a second object 817 on a display 860.

The first object 811 may display news video 813 associated with a first quality information item (e.g., an indication of the video's resolution). The news video 813 may include sub-contents 815 associated with a second quality information. For example, the second quality information may indicate that the sub-content has a lower resolution than the video 813. To find an external device capable of outputting the sub-content 815 based on the news video 813 including the sub-content 815, an external device search application may be automatically executed as a service corresponding to the first object 811. As a result of executing the external device search application, a first external device 803 may be identified. Afterwards, the sub-content 815 may be provided to the user 830 through the first external device 803. In some implementations, the second external device 803 may be identified as a result of executing the external device search application. The external device search application may identify the second external device 803 based on the second external device 803 being capable of supporting the second quality information corresponding to the sub-content 815.

According to an embodiment of the present disclosure, music video 819 and additional information 821 (e.g., a singer, a composer, lyrics, or a file size) regarding the music video 819 may be displayed in the second object 817. As a service for the external device search application, a second representation 823 for selecting a second external device 805, a third representation 825 for selecting a third external device 807, and a fourth representation 827 for selecting a fourth external device 809 may be displayed in the second object 817.

According to an embodiment of the present disclosure, images of the music video 819 may be provided through the second external device 805, a sound of the music video 819 may be provided through the third external device 807, and the additional information 821 may be provided through the fourth external device 809, to the user 830. According to an embodiment of the present disclosure, the third external device 807 may display, on a display, a user interface 842 indicating that the sound of the music video 819 is being provided.

According to an embodiment of the present disclosure, the electronic device 801 may receive and play video data from a server (e.g., the server 206) by using a video on demand (VOD) reference system streaming service. If the video is encoded through extendable video coding (e.g., scalable video coding (SVC) or scalable high-efficiency video coding (SHVC), the video may include layer data providing various qualities (e.g., a spatial resolution, a display quality resolution, or a temporal frame rate).

When transmitting the video data to the electronic device 801, the server may transmit a base layer and at least one enhancement layers through the video data. The electronic device 801 decodes a base layer based on specifications of the electronic device 801 to play low-quality video (e.g., the sub-content 815). Resolution-based quality may include, for example, high definition (HD), standard definition (SD), or low definition (LD). Resolution-based quality may include high resolution, middle resolution, or low resolution on a resolution screen. A frame-rate-based quality may include a frame rate such as a 60 frame per second (f/s), a 30 f/s, or a 15 f/s.

According to an embodiment of the present disclosure, the electronic device 801 may identify (e.g., extract) information indicating that an enhancement layer supporting SD or HD exists in video (e.g., the news video 813). For example, the electronic device 801 may perform a search of a reference table to find the external device 801 supporting HD. The electronic device 801 may display video at HD. The electronic device 801 may also indicate the existence of a suitable external device capable of displaying video at HD through a representation.

According to an embodiment of the present disclosure, if the user 830 selects, for example, the second representation 823, the electronic device 801 may transmit information about the base layer and information about the enhancement layer to the second external device 805. According to another embodiment of the present disclosure, if the user 830 selects, for example, the second representation 823, the server may transmit the information associated with the enhancement layer to the second external device 805 and the electronic device 801 may transmit the information about the base layer to the second external device 805.

According to an embodiment of the present disclosure, if video data includes one or more video objects, the electronic device 801 may output an identification of an external device capable of independently and separately displaying only one or more video objects. For example, a screen of the news video 813 may include a background area, an announcer area, or a material screen area, and may further include material screen video (e.g., the sub-content 815) corresponding to the material screen area.

According to an embodiment of the present disclosure, the electronic device 801 may perform a search of a reference table including information about capabilities of a terminal device related to the user 830 to identify an external electronic device (e.g., the first external device 803) capable of processing the material screen video (e.g., the sub-content 815). The reference table may include, for example, an indication of a resolution that is supported by a display of the external electronic device, an indication of whether or not a multimedia player is installed on the external electronic device, an indication of a current state of a battery, and/or an indication of the processing power of the external electronic device.

According to an embodiment of the present disclosure, the electronic device 801 may identify (e.g., recognize) the first frame in which the material screen video (e.g., the sub-content 815) is output from among a plurality of frames of the news video 813. According to an embodiment of the present disclosure, the electronic device 801 may display a representation, such as a button or another input component, (not shown) identifying an external electronic device. For example, the representation may be displayed when the playback of the video reaches (or is about to reach) the frame when the material screen video (e.g., the sub-content 815) starts. According to an embodiment of the present disclosure, the electronic device 801 may transmit information about the material screen video (e.g., the sub-content 815) to the external device (e.g., the first external device 803) in a section where the material screen video is displayed.

According to an embodiment of the present disclosure, although not shown, if the electronic device 801 includes a plurality of displays, the electronic device 801 may select at least one of the displays based on quality information of contents to display the contents. According to an embodiment of the present disclosure, if video (e.g., the news video 813) is encoded using high efficiency video coding (HEVC), the electronic device 801 may independently separate and decode a subset (e.g., a largest coding unit (LCU) or a coding tree unit (CTU)) of the video corresponding to at least an area of the display 860. According to an embodiment of the present disclosure, the electronic device 801 identifies (e.g., searches for) an external electronic device capable of processing HEVC.

According to various embodiments of the present disclosure, an electronic device may include a memory configured to store information about one or more services and a service management module that is implementable with a processor, in which the service management module is configured to display an object corresponding to content or a function on a display, determine a service related to the object from among the one or more services at least based on the content or the function, and provide the service in relation to the object.

According to an embodiment of the present disclosure, the service management module may determine an area where the object is to be displayed on a display functionally connected to the electronic device, based on a priority of the content or the function and display the object on the determined area.

According to an embodiment of the present disclosure, the service management module may display at least a subset of the content differently from another subset of the content, based on context information related to a user.

According to an embodiment of the present disclosure, the service management module may display a representation corresponding to the service in relation to the object on the display.

According to an embodiment of the present disclosure, the service management module may determine the service further based on a capability of at least one of one or more sensors and an external electronic device functionally connected to the electronic device.

According to an embodiment of the present disclosure, the service management module may obtain an execution result of the at least one service, present at least a subset of the content if the execution result satisfies a specified reference, and avoid presenting the at least a subset of the content if the execution result fails to satisfy the specified reference.

According to an embodiment of the present disclosure, the service management module may identify at least one input with respect to the object and another object that is displayed on the display and provide the service based on the function and a function corresponding to the another object, in response to the at least one input.

According to an embodiment of the present disclosure, the service management module may determine the service based on information about the function or at least a first portion of the content and information about another function corresponding to the another object or at least a second portion of another content.

According to an embodiment of the present disclosure, the service management module may generate a search word by using the first portion and the second portion and provide the service by using the search word.

According to an embodiment of the present disclosure, the service management module may determine the service based on at least one of an order, a direction, and a pressure in which the at least one input is applied to corresponding one of the object and the other object.

According to an embodiment of the present disclosure, the service management module may provide the service or another service related to the service according to another object displayed on the display.

According to an embodiment of the present disclosure, the service management module may display the object on at least a portion of a first side of a three-dimensional figure displayed on the display and provide the service on at least a portion of a second side of the three-dimensional figure.

According to an embodiment of the present disclosure, the service management module may transmit information related to the service to an external electronic device such that at least a portion of the service is executed through the external electronic device.

According to an embodiment of the present disclosure, the service management module may select the external electronic device based on a display quality of the subset of the content.

According to an embodiment of the present disclosure, the service management module may change an execution screen of the at least one service based on context information of an external electronic device and display the changed execution screen on the display.

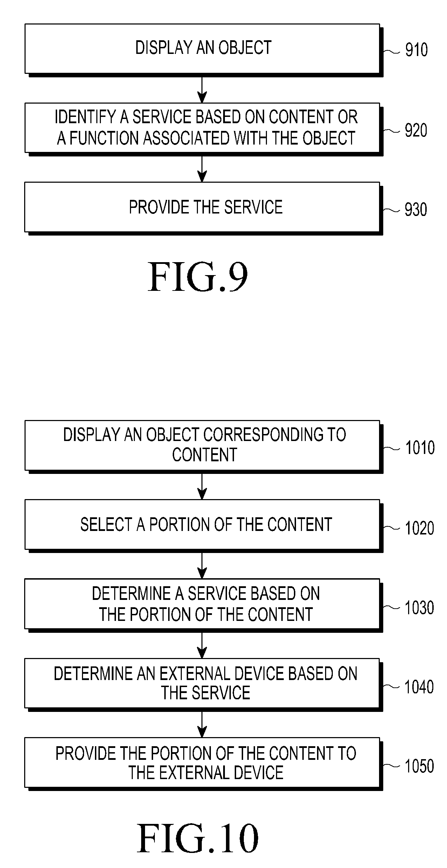

FIG. 9 is a flowchart of an example of a process, according to various embodiments of the present disclosure. According to the process, in operation 910, the electronic device (e.g., the object display module 581) displays one or more objects corresponding to respective contents or functions on a display. According to an embodiment of the present disclosure, the one or more objects may be arranged in a lattice form to display content, an application, or a folder.

According to an embodiment of the present disclosure, any of the objects may have a triangular form, a quadrangular form, or a circular form having one or more sides. The object may include an icon or a widget presented in conjunction with various cubic figures, such as a tetrahedron, a sphere, a six-sided pyramid, or a cubic figure having a trapezoid. According to an embodiment of the present disclosure, content may include an article (e.g., a research paper or an advertisement) having at least one of a text, an image, audio, and video.

According to an embodiment of the present disclosure, in operation 920, the electronic device (e.g., the service determination module 583) automatically identifies a service related to the object based on at least one of the content or the function. For example, the electronic device may retrieve from memory at least one of the content and/or an indication of a function of the electronic device (e.g., an alphanumerical string), and use the retrieved content or indication to identify the service related to the object.

According to an embodiment of the present disclosure, in operation 930, the electronic device (e.g., the service providing module 587) provides the service in relation to the object. For example, the electronic device may distinguish the service from another service and display a representation capable of executing the service in a corresponding object area. In another example, the electronic device may display the representation through visual information (e.g., an arrow) capable of association with the object. According to an embodiment of the disclosure, providing the service may include at least one of displaying a representation (e.g., a button or another input component) which when selected by the user causes the service to be executed, or automatically executing the service.

FIG. 10 is a flowchart of an example of a process, according to various embodiments of the present disclosure. A description of a part that is the same as or similar with that described with reference to FIG. 9 will not be provided. According to the process, in operation 1010, the electronic device displays at least a subset of content by using an object. In operation 1020, the electronic device selects the portion of the content based on preference setting automatically or in response to an input from the user. According to an embodiment of the present disclosure, the electronic device may identify an attribute (e.g., a resolution, a type, or a keyword) of the portion of the content.

In operation 1030, the electronic device determines a service related to the object based on the portion of the content.

According to an embodiment of the present disclosure, in operation 1040, the electronic device determines an external device capable of displaying the portion of the content from among one or more external devices that are identified as a result of executing the service. In operation 1050, the electronic device transmits the portion of the content to the external device, such that the portion of the content may be output through the external device.

According to various embodiments of the present disclosure, a method for providing a service by an electronic device may include displaying an object corresponding to content or a function, determining at least one service related to the object based on the content or the function by using at least one processor, and providing the at least one service in relation to the object.

According to an embodiment of the present disclosure, the displaying of the object may include determining an area where the object is to be displayed on a display functionally connected to the electronic device, based on a priority of the content or the function.

According to an embodiment of the present disclosure, the displaying of the object may include displaying at least a subset of the content differently from another subset of the content, based on context information related to a user.

According to an embodiment of the present disclosure, the at least one service may be determined further based on another content or another function corresponding to another object displayed on the display.

According to an embodiment of the present disclosure, the other object may be selected by an input of the user.

According to an embodiment of the present disclosure, the at least one service may be determined further based on a capability of at least one of one or more sensors and an external electronic device functionally connected to the electronic device.

According to an embodiment of the present disclosure, the providing of the at least one service may include obtaining an execution result of the at least one service, presenting at least a subset of the content if the execution result satisfies a specified reference, and avoiding presenting the at least a subset of the content if the execution result fails to satisfy the specified reference.

According to an embodiment of the present disclosure, the providing of the at least one service may include transmitting a subset of the content to an external device based on the at least one service.

According to an embodiment of the present disclosure, the method may further include, prior to the transmitting of the subset of the content, selecting the external electronic device based on a display quality of the subset of the content.

According to an embodiment of the present disclosure, the providing of the at least one service may include changing an execution screen of the at least one service based on context information of an external electronic device and displaying the changed execution screen on the display.

A term "module" used herein may mean, for example, a unit including one of or a combination of two or more of hardware, software, and firmware. The "module" may be interchangeably used with a unit, logic, a logical block, a component, or a circuit. The "module" may be a minimum unit or a portion of an integrated component. The "module" may be a minimum unit or a portion thereof performing one or more functions. The "module" may be implemented mechanically or electronically. For example, the "module" according to the embodiments may include at least one of an application-specific integrated circuit (ASIC) chip, field-programmable gate arrays (FPGAs), and a programmable-logic device performing certain operations already known or to be developed.

At least a part of a device (for example, modules or functions thereof) or a method (for example, operations) according to various embodiments of the present disclosure may be implemented with a command stored in a computer-readable storage medium in the form of a program module. When the command is executed by a processor (for example, the processor 220), the one or more processors may perform a function corresponding to the command. The computer-readable storage medium may be, for example, the memory 230.

According to various embodiments of the present disclosure, there is provided a storage device having stored therein commands that, when executed by the at least one processors, are configured to cause at least one processors to perform operations of displaying an object corresponding to content or a function, determining at least one service related to the object based on the content or the function by using at least one processor, and providing the at least one service in relation to the object.

The computer readable recording medium includes magnetic media such as hard disk, floppy disk, or magnetic tape, optical media such as compact disc read-only memory (CD-ROM) or digital versatile disc (DVD), magneto-optical media such as floptical disk, and a hardware device such as ROM. RAM, flash memory storing and executing program commands. Further, the program instructions include a machine language code created by a complier and a high-level language code executable by a computer using an interpreter. The foregoing hardware device may be configured to be operated as at least one software module to perform an operation of the present disclosure, or vice versa.

Modules or programming modules according to various embodiments of the present disclosure may include one or more of the foregoing elements, have some of the foregoing elements omitted, or further include additional other elements. Operations performed by the modules, the programming modules or other elements may be executed in a sequential, parallel, repetitive or heuristic manner. Also, some of the operations may be executed in a different order or omitted, or may have additional different operations. The embodiments disclosed herein have been provided for description and understanding of disclosed technical matters, and are not intended to limit the scope of the present disclosure. Therefore, it should be construed that the scope of the present disclosure includes any change or other various embodiments based on the technical spirit of the present disclosure.

As is apparent from the foregoing description, according to various embodiments of the present disclosure, the method and electronic device for providing the object-related service may provide a user interface allowing a user to intuitively recognize a service related to an object corresponding to content or a function displayed on a display.

Moreover, according to various embodiments of the present disclosure, in the method and electronic device for providing the object-related service, based on capabilities of a plurality of electronic devices, the plurality of electronic devices may provide a service corresponding to content or a function of any one of the plurality of electronic devices in association with one another, thereby providing a service suitable for a state of the user or the electronic device.

FIGS. 1-10 are provided as an example only. At least some of the operations discussed with respect to these figures can be performed concurrently, performed in a different order, and/or altogether omitted. It will be understood that the provision of the examples described herein, as well as clauses phrased as "such as," "e.g.", "including", "in some aspects," "in some implementations," and the like should not be interpreted as limiting the claimed subject matter to the specific examples.

The above-described aspects of the present disclosure can be implemented in hardware, firmware or via the execution of software or computer code that can be stored in a recording medium such as a CD-ROM, a Digital Versatile Disc (DVD), a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

While the present disclosure has been particularly shown and described with reference to the examples provided therein, it will be understood by those skilled in the art that various changes in form and details may be made therein without departing from the spirit and scope of the present disclosure as defined by the appended claims.

## Claims

1. A method for providing a service by an electronic device (200), the method comprising:
displaying a first object on a display (260) of the electronic device (200), the first object being associated with at least one of a first content or a first function;
determining a service related to the first object based on at least one of the first content or the first function; and
providing the service by the electronic device (200).

2. The method of claim 1, wherein the first object is displayed at a location on the display (260) that is selected based on a priority associated with the first content or the first function.

3. The method of claim 1, further comprising displaying a second object on the display (260), the second object being associated with at least one of a second content or a second function, wherein displaying the first object comprises displaying the first content differently from the second content based on context information related to a user.

4. The method of claim 1, further comprising displaying a second object on the display (260), the second object being associated with at least one of a second content or a second function, wherein the service is identified further based on at least one of the second content or the second function.

5. The method of claim 1, wherein the service is determined further based on a signal from at least one sensor (340) that is part of the electronic device (200) or an external electronic device (202) functionally connected to the electronic device (200).

6. The method of claim 1, wherein:
the service is determined based on the first content, and
providing the service includes: executing an application to generate an execution result, and presenting at least a portion of the first content only when the execution result satisfies a predetermined condition that is based on the first content.

7. The method of claim 1, wherein providing the service comprises transmitting to an external device (202) a portion of the first content.

8. The method of claim 1, further comprising selecting the external device (202) to receive the portion of the first content based on a characteristic of the portion of the first content.

9. The method of claim 1, wherein providing the service comprises displaying on the display (260) an execution screen associated with the service, the execution screen being displayed at least in part based on context information associated with an external electronic device (202).

10. An electronic device (200) for providing a service, comprising:
a memory (230);
a display (260); and
at least one processor (220), operatively coupled to the memory, configured to:
display a first object on the display (260), the first object being associated with at least one of a first content or a first function;
determine a service related to the first object based on at least one of the first content or the first function; and
provide the service.

11. The electronic device (200) of claim 11, wherein providing the service includes displaying on the display (260) an input component, which, when activated, causes an application associated with the service to be executed by the at least one processor (220).

12. The electronic device (200) of claim 11, wherein:
The at least one processor (220) is further configured to display a second object on the display (260), the second object being associated with a second function, and detect an input selecting the first object and the second object,
the service is determined further based on the second function, and
the service is determined in response to the input.

13. The electronic device (200) of claim 11, **characterized in that**:
the at least one processor (220) is further configured to display a second object on the display, the second object being associated with at least one of a second content or a second function, and
the service is determined further based on at least one of the second content or the second function.

14. The electronic device (200) of claim 11, wherein the service is provided based on another object that is displayed on the display (260).

15. The electronic device (200) of claim 11, wherein the at least one processor (220) is further configured to:
display the object at a first location in a three-dimensional figure displayed on the display (260); and
provide the service at a second location in the three-dimensional figure.
